# EUROPEAN PATENT SPECIFICATION

(11) **EP 4 272 568 B1**
(45) Date of publication and mention of the grant of the patent: **02.07.2025**
(21) Application number: 22172199.6
(22) Date of filing: 06.05.2022
(51) Int. Cl.: A22C 11/02, A22C 11/12

(54) **A METHOD OF CONTROLLING A ROBOTIC DEVICE FOR SUPPLYING A CLIPPING MACHINE WITH A SUPPLY OF TUBULAR PACKAGING CASING**
VERFAHREN ZUM STEUERN EINER ROBOTERVORRICHTUNG ZUR VERSORGUNG EINER CLIPMASCHINE MIT SCHLAUCHFÖRMIGEN VERPACKUNGSHÜLLEN
PROCÉDÉ DE COMMANDE D'UN DISPOSITIF ROBOTIQUE POUR FOURNIR UNE MACHINE D'AGRAFAGE AVEC UNE ALIMENTATION D'ENVELOPPES D'EMBALLAGE TUBULAIRE

(43) Date of publication of application: 08.11.2023
(73) Proprietor: Poly-clip System GmbH & Co. KG, 65795 Hattersheim (DE)
(72) Inventor: Meyrahn, Joachim, 64390 Erzhausen (DE); Pfeifer, Andreas, 51688 Wipperfürth (DE); Weuste, Steffen, 58540 Meinerzhagen (DE)
(74) Representative: Eisenführ Speiser

(56) References cited:
- EP-A1- 3 183 970
- US-A1- 2019 059 400
- US-A1- 2019 059 402

## Description

The present invention relates to a method for controlling a robotic device by a control unit of a clipping machine, the robotic device being arranged in a system for producing sausage-shaped products by filling a filling material into a tubular packaging casing supply arranged on a filling tube of a clipping machine, wherein the system comprises at least the clipping machine, a storage device for storing at least one packaging casing supply, and a robotic device for transferring the packaging casing supply from the storage device to the filling tube of the clipping machine, wherein the control unit is adapted to provide control commands at least to the robotic device and preferably also to receive signals from the robotic device. The present invention further relates to such a system and to a robotic device being arranged in an aforesaid system for producing sausage-shaped products by filling a filling material into a tubular packaging casing arranged on a filling tube of a clipping machine.

In practice, packaging machines, like clipping machines, are known, for producing sausage-shaped products, like sausages. In such a clipping machine, filling material is fed into a tubular or bag-shaped packaging casing which is stored on a filling tube, and which is closed at its front end by a closure means, like a closure clip, i.e. the end of the packaging casing pointing in the feeding direction of the filling material. After a predetermined portion of filling material has been fed into the tubular or bag-shaped packaging casing, the filled tubular or bag-shaped packaging casing is gathered by gathering means, a plait-like portion being at least substantially free from filling material is formed thereto, and at least one first closure clip is placed and closed on said plait-like portion by a clipping device, for closing the portion of the tubular or bag-shaped packaging casing just filled. Additionally, at least one second closure clip may be placed for closing the front end of the sausage-shaped product to be produced next. For severing the sausage-shaped product just produced from the remaining supply of tubular or bag-shaped packaging casing, a cutting device may be provided for cutting off the plait-like portion between the first and second closure clip. The sausage-shaped product just produced may then be discharged from the clipping machine by a discharge device, like a belt conveyor, for further treatment, like cooking or smoking.

From US patent applications 2019/059400 and US 2019/059402, filling machines and methods for filling tubular casings are known. Each of said filling machines includes a filling apparatus which is coupled to a filling hopper via an extrusion head and a delivery tube. The filling apparatus includes a twist-off head with a receiving portion that is rotatable about a horizontal axis and a first and a second filling tube arranged horizontally and parallel to each other and mounted to the receiving portion. A casing braking system is provided at the front end of the said filling tube. The other filling tube is in the charging position, where a tubular casing is loaded onto said filling tube by a case loading unit. Said case loading unit includes a case magazine and a case gripping device. The case gripping device has vertically movable upper and lower gripper jaws, for positioning a tubular casing in front of the filling tube being in the charging position. A push-on device pushes the tubular casing from the case gripping device onto the filling tube.

In such a known clipping machine, a supply of tubular or bag-shaped packaging casing, which may be provided in the form of a hollow stick of tubular casing material, folded like a concertina, is manually shifted onto the filling tube, by an operator. The operator pivots the filling tube out of its filling position, shifts a tubular packaging casing supply onto the filling tube, and pivots the filling tube back into its filling position.

Refilling a tubular packaging casing supply onto a filling tube of a clipping machine by hand is time consumable and requires the presence of an operator for each refill event. Since clipping machines can have high cycle rates, it may be necessary for an operator to be constantly in front of the clipping machine to push new packaging casings onto the filling tube. Despite the high level of automation of a filling/clipping machine combination, this approach does not help to make the production process efficient. In addition, the operator's activity is monotonous and is thus physically and mentally stressful.

Thus, it is an object of the present invention, to overcome the above mentioned drawbacks, and to create a possibility that the production process is efficient and the burden for an operator is reduced.

A method solving the aforesaid drawbacks is defined in independent method claim 1, wherein dependent claims 2 through 11 provide further developments of that method. In addition, a system overcoming the aforesaid problems is defined in independent system claim 12, wherein dependent claims 13 through 15 provide further developments of that system.

According to the present invention, there is provided a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided with at least two filling tubes, a storage device for storing at least one tubular packaging casing supply, and a robotic device for transferring a tubular packaging casing supply from the storage device onto a filling tube of the clipping machine, wherein the control unit is adapted to provide control commands, at least to the robotic device, and wherein the robotic device includes a gripper unit or means for gripping a tubular packaging casing supply. The method comprises the steps of moving the robotic device into a take-up position for taking up by the gripper unit a tubular packaging casing supply provided in a storage device, gripping the tubular packaging casing supply provided in said storage device by the gripper unit, moving the robotic device from the take-up position toward the filling tube, transferring the tubular packaging casing supply onto the filling tube by the gripper unit, and releasing the tubular packaging casing supply onto the filling tube of the clipping machine by the gripper unit.

The method enables the transfer of a tubular packaging casing supply onto the filling tube being in a refill position, in which a tubular packaging casing supply will be shifted onto the filling tube, at least approximately independent from the position of the storage device and the refill position of the filling tube of the clipping machine. The robotic device may be programmed and controlled on the basis of various criteria, a single one or a plurality of several criteria. Such criteria can take into account the specific design of the production system and/or components thereof, and/or features of the sausage-shaped products to be produced.

For example, the current positions of the storage device and the filling tube in the refill position, and the moving path of the robotic device between the take-up or pick-up position and a release position, in which the tubular packaging casing supply is released onto the filling tube, could be selected according to desired parameters, like the shortest or fastest moving path, and/or dependent on the periphery. Thus, a complex design or cumbersome alignment of the storage device and the clipping machine may be omitted.

Alternatively or additionally, criteria regarding features of the sausage-shaped products to be produced could be the kind and size of the sausage-shaped products, like the length, the filling level of the sausage-shaped product to be filled or the kind and size of the tubular packaging casing. The inventive method for controlling the robotic device, particularly when taking into account one or more of these and possible further product-specific features enables an adaption of the operation of the robotic device to the kind of sausage-shaped products to be produced. This leads to an optimization of the whole production system.

The method according to the invention enables the automated refilling of a new or unused tubular packaging casing supply onto a filling tube. This relieves an operator from the monotonous work of refilling a tubular packaging casing supply onto a filling tube. In addition, damage to the relatively sensitive tubular packaging casing supply, depending on the casing material used, can also be avoided and the supply can be safely applied to the filling tube.

One of the basic ideas of the present invention has been explained above on the basis of a clipping machine with two filling tubes. Of course, the clipping machine can also have more than two filling tubes. It is also possible to provide the method of the present invention for a clipping machine with only one filling tube, in which case the individual steps are to be adapted accordingly.

The tubular packaging casing supply may advantageously be provided in the form of hollow sticks of folded and shirred tubular casing. These hollow casing sticks may easily and reliably be gripped by the gripper unit of the robotic device for being removed from the storage device and transferred onto the filling tube.

It is particularly advantageous if the tubular packaging casing supply is already closed at one end by at least one closure means, such as a closure clip. The closed end of the supply is the end that points in the filling direction when the supply is placed on a filling tube.

The use of a gripper unit allows the tubular packaging casing supply to be provided in various positions, like horizontal or vertical, and thus, no specific storage device is needed. In particular, the storage device may be designed independently from the kind of filling tube and its orientation in the refill position.

The gripping unit for gripping a tubular packaging casing supply can be designed in different ways. In a preferred embodiment, the gripping unit of the robotic device includes at least a first and a second gripper element being arranged laterally along a longitudinally extending gripping axis, and at least a first sensor unit associated with the gripper unit, for detecting the position of the gripper unit relative to the tubular packaging casing supply in the storage device, and/or for detecting the position of the gripper unit relative to the filling tube. Such a sensor unit enables an exact positioning of the gripper unit for gripping the tubular packaging casing supply and an exact positioning of the tubular packaging casing supply onto the filling tube. Detecting the position of the gripper unit by the first sensor unit may also include the detection of the position of the gripper elements, i.e. whether they are in an opened position or a closed position Thereby, damages to the tubular packaging casing supply and/or to components of the clipping machine, e.g. by accidental collisions, may be prevented, and production losses may be omitted. Various sensor units for detecting the position of the gripper unit may be used, like contact sensors or contactless sensors. In order to prevent damages, preferably, contactless sensors may be used, like optical sensors, inductive sensors or ultrasonic sensors.

It is further of advantage that the gripper unit includes at least a second sensor unit, for sensing the gripping force exerted by the at least first and second gripper elements to the tubular packaging casing supply while being gripped. The second sensor unit may include a suitable sensor element, like a pressure sensor, a force sensor or a piezo sensor. Thereby, the tubular packaging casing supply may securely be gripped by the gripper unit, and damages to the tubular packaging casing supply may be omitted. Alternatively or additionally, the second sensor unit may also include a position sensor for determining the length of the movement path of the gripper elements, such that said gripper elements may be moved about a predefined distance.

Furthermore, for preventing damages to the tubular packaging casing supply while being gripped by the gripper unit, the gripping force exerted by the gripper unit provided preferably with at least first and second gripper elements onto the tubular packaging casing supply may be limited to a predefined value. The limit of the gripping force, or its predefined value respectively, may be selected dependent on the kind of casing material and/or on the size of the casing material, like its diameter, the lengths or the weight of the tubular packaging casing supply.

The inventive method may further comprise the step of moving the gripper unit along a predefined moving path towards the filling tube of the clipping machine.

Such a predefined path securely prevents damages, and particular collisions between the robotic device and the clipping machine and/or peripheral devices.

For being moved on a predefined path between the storage device and the filling tube of the clipping machine, the robotic device may be programmed and controlled respectively, e.g. in accordance with the kind of clipping machine or the kind and position of peripheral devices. Thus, the movement of the robotic device may exactly be adapted to the specific operation conditions. Moreover, for optimizing the operation of the robotic device, such a predefined path may be selected to be the shortest and/or the most efficient path. The programming may be executed by an operator that implements a respective program into the control unit of the clipping machine or the control unit of the robotic device. Alternatively, the robotic device may manually be guided along a selected path, and said path may thereby be stored in the control unit. In a further alternative design, the robotic device includes a specific sensor unit that allows the detection of the position of the robotic device relative to its surrounding area, and specifically, to devices in its surrounding area. The robotic device may than find a respective moving path by self-learning, e.g. during one or more test runs.

For controlling the operation of the robotic device, it is possible that the programming regarding the movement path of the robotic device is stored in the control unit of the robotic device, and that the commands for controlling the robotic device, at least essential commands, like a general start or stop command or commands based on information received from other components of the system, are output from the control unit of the clipping machine. However, it is also possible that the control unit of the clipping machine includes the programming and the control logic for executing control of the robotic device. In this case, a separate control unit for the robotic device may be omitted.

In a preferred embodiment, the method further comprising the step of position the gripper unit with its gripping axis coaxially to the central axis of the filling tube and in front of the filling tube, and shifting the tubular packaging casing supply onto the filling tube by the gripper unit. In this arrangement, the first sensor unit may detect the position of the tubular packaging casing supply on the filling tube, and the tubular packaging casing supply may be released onto the filling tube.

Alternatively to the detection of the position of the tubular packaging casing supply on the filling tube by the first sensor unit, the drive unit of the robotic device may be provided with an encoder, such that a target position of the gripper unit may be determined by said encoder.

The inventive method thereby enables an exact positioning of the tubular packaging casing supply onto the filling tube, without damaging the tubular packaging casing supply.

For applying a defined braking force onto the tubular packaging casing material while being pulled off from the filling tube, the filling tube of the clipping machine is provided with a casing brake assembly. According to the present invention, the method further comprises the step of positioning the casing brake assembly in front of the first end of the filling tube after the tubular packaging casing supply has been shifted onto the filling tube and prior the tubular packaging casing supply has been released onto the filling tube by the gripper unit. In this position, the casing brake assembly securely holds the tubular packaging casing supply on the filling tube, and prevents the tubular packaging casing supply from unintentional unfolding after being released onto the filling tube by the gripper unit.

In a further preferred embodiment, the operation of the robotic device may be adapted to the production process executed by the clipping machine. The adaption of the operation of the robotic device may include the adaption of one or more of the moving path sections, the time points of starting and stopping the robotic device or its movement speed. Thereby, the operation of the robotic device may be optimized in accordance with specific products to be produced or specific operation conditions of the system or components thereof.

For further optimizing the production process, in particular, for increasing the production speed and for omitting unnecessary down times, an allocation or standby position for the robotic device may be provided, in which a tubular packaging casing supply is removed from the storage device but not jet transferred onto the filling tube. The robotic device thereby may provide a tubular packaging casing supply to be arranged on the filling tube close to the filling tube in the refill position, and at the same time, the storage device may move a further tubular packaging casing supply into the take-up position.

In order to refill tubular packaging casing supply onto the filling tube of the clipping machine or to equip the filling tube with a tubular packaging casing supply, the robotic device may be activated upon a signal indicating a specific condition of the clipping machine. This specific condition of the clipping machine may be a predefined amount of tubular packaging casing supply on the filling tube involved in the production process, namely the filling tube in the working position, in which filling material is fed into tubular packaging casing supply. During using up the remaining tubular casing supply on the filling tube in the working position, the robotic device may take-up tubular packaging casing supply from the storage device, and may be moved towards the filling tube. Thereby, the time for refilling tubular packaging casing supply onto the filling tube may be shortened.

Alternatively, the signal for activating the robotic device may be derived from the position of the filling tube that is just moved towards the refill position, like a specific angular position of the filling tube, or from the position of the casing brake assembly, e.g. when removed from the filling tube being currently in the working position. Further alternatively, the signal indicating a specific condition of the clipping machine may be derived from the clipping cycle, e.g. a specific time point in the clipping cycle.

It has to be understood that the robotic device may be started immediately after receipt of the signal indicating the specific condition of the clipping machine, or a predefined time period after receiving said signal.

Further alternatively, or additionally thereto, the robotic device may also be activated upon a signal indicating a specific condition of the storage device, like the presence of tubular packaging casing supply.

In a preferred embodiment, the robotic device may be deactivated upon a signal indicating a specific condition of the clipping machine and/or a specific condition of the storage device. Such a signal may indicate failure in the production process of the clipping machine, like missing closure clips, malfunctions of the filler, a casing burst or any other technical problem of the clipping machine, which may be determined by the control unit of the clipping machine. The signal, on the basis of which the robotic device may be stopped, may also be received from the storage device, like a signal indicating the absence of tubular packaging casing supply in the storage device, or a signal indicating technical problems or malfunctions of the storage device. Such a signal may further be transmitted to the operator, including information regarding the specific condition or problem as well as an instruction for solving said problem.

The clipping machine according to the present invention includes at least two filling tubes, with one filling tube being arranged in a filling position in which filling material is fed into the tubular packaging casing, and the other filling tube arranged in a refill position in which a tubular packaging casing supply is fed onto the filling tube, it is of advantage that, in accordance with the inventive method, the robotic device may be activated upon a signal indicating one of the filling tubes, which is arranged in or moving towards the refill position. Thereby, the refill process may further be shortened. The signal may just indicate the movement of the filling tube towards the refill position or indicating the filling tube as being in a predefined angular position relative to the working position or the refill position.

In the case that the clipping machine includes at least two filling tubes, it is of advantage that each of the at least filling tubes of the clipping machine is provided with a casing brake assembly. In this case, the inventive method may include the step of positioning the casing brake assembly in front of the first end of the filling tube being arranged in the refill position, after the tubular packaging casing supply has been shifted onto the filling tube and prior the tubular packaging casing supply has been released onto the filling tube by the gripper unit. In this position, the casing brake assembly securely holds the tubular packaging casing supply on the filling tube in the release position as well as while being moved towards the working position, and prevents the tubular packaging casing supply from unintentional unfolding after being released onto the filling tube by the gripper unit.

For enabling a safe gripping and releasing of the tubular packaging casing supply, it further of advantage that the gripper unit includes at least one further sensor unit for detecting the position of the gripper elements. Said sensor may indicate the gripper elements in an opened position, a closed position or any position there between. The sensor signal, when indicating the gripper elements in their opened position, may be used to actuate the robotic device, e.g. to move the robotic device into the take-up position, for gripping a tubular packaging casing supply positioned in the storage device. Accordingly, when indicating the gripper elements in their closed position, the robotic device may be activated to move towards the filling tube of the clipping machine.

The gripper unit for gripping a tubular packaging casing supply may detachably be coupled to the robotic device. In this case, the gripper unit may be replaced by another gripper unit, in order to adapt the robotic device to the tubular packaging casing supply used. However, it is also possible that the gripper unit has a universal size, such that the gripper unit may be used for each, or at least a great variety of tubular packaging casing supplies.

As mentioned several times, another idea of the invention is to provide a system for the production of sausage-shaped products, such as sausages, by filling a filling material into a tubular packaging casing supply arranged on a filling tube of a clipping machine. The system comprising at least a storage device for storing at least one packaging casing supply, a clipping machine provided with at least two filling tubes onto each of which a packaging casing supply can be applied, a robotic device for transferring a packaging casing supply from the storage device onto a filling tube of the clipping machine, and a control unit for controlling the operation of at least the robotic device, wherein the control unit is adapted to control the operation of the robotic device depending on the filling status of a sausage-shaped product to be filled.

The refilling process can thus be optimally adapted to the respective production. In particular, it is possible to provide individual starting times for the refilling process according to the product to be manufactured. This increases the flexibility in the control of the system and the possible applications of the system according to the invention.

In a further preferred embodiment, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

The system according to the invention enables the refilling of a tubular packaging casing supply onto the filling tube positioned in the refilling position to be carried out in parallel with the filling process. This considerably shortens production times compared to the prior art and allows continuous production to be carried out.

Alternatively or in addition, it is also possible that the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the first filling tube is provided with a first casing brake unit reversibly removable from the first filling tube and the second filling tube is provided with a second casing brake unit reversibly removable from the second filling tube, and wherein the control unit is configured to release the tubular packaging casing supply fed to the filling tube located in the refilling position when the respective casing brake unit is positioned in front of the filling tube shortly before being pushed onto the latter.

This makes it possible to hold the tubular packaging casing supply on the filling tube in the folded and shirred form without the supply or stock unfolding or not being shirred anymore when it is released by the gripper unit, since immediately before release the casing brake assembly is pushed onto the supply. This means that unfolding or unshirring is no longer possible.

For enabling a movement of the filling tubes from the lateral position into the refill position, when being rotated by the revolver plate of the filling tube assembly, with a reduced risk of collision, in one embodiment of the clipping machine, a recess may be provided in the housing of the clipping machine, which enables a passage of the filling tubes, and particularly, of the front ends of the filling tubes, during their movement between the lateral position and the refill position. Said recess is arranged in the region of the right edge of the front side of the clipping machine, below the filling tube when in the filling position.

This recess has the further advantage that the angle about which the filling tubes have to be pivoted outwards into the lateral position, i.e. the angle between the filling position and the lateral position of the filling tube, may be smaller compared with such an angle in a clipping machine, which is not provided with such a recess. Thereby, also the necessary operation space in front of the clipping machine is reduced.

According to the present invention, there is further provided the use of a robotic device including a gripper unit controlled by the inventive method as explained herein and being arranged in a system for producing sausage-shaped products..

The inventive robotic device thereby provides all advantages as explained in conjunction with the inventive method for controlling a robotic device.

There is further disclosed a filling tube assembly of a clipping machine for producing sausage-shaped products, like sausages, by filling a filling material into a tubular packaging casing, the filling tube assembly comprising: a revolver plate, which is rotatable about a rotation axis, at least a first filling tube and a second filling tube, each having a central axis, wherein the filling tubes are mounted on the revolver plate, at least a first casing brake assembly and a second casing brake assembly, wherein the first casing brake assembly is connected to the first filling tube and the second casing brake assembly is connected to the second filling tube, and a drive device for rotating the revolver plate including the filling tubes about the rotation axis, wherein the central axis of the first filling tube and the central axis of the second filling tube define an angle larger than 0°, preferably between 15° and 75°, and more preferably between 30° and 60°.

Preferably, the first casing brake assembly is associated with the first filling tube and includes a first casing brake unit positioned in the region of a first end of the first filling tube, and is pivotally coupled to the revolver plate by a first telescopic casing brake holder unit, and the second casing brake assembly is associated with the second filling tube and includes a second casing brake unit positioned in the region of a first end of the second filling tube, and is pivotally coupled to the revolver plate by a second telescopic casing brake holder unit.

Preferably, the first casing brake unit is linearly reversibly shiftable along the first filling tube onto its first end and pivoted away from the first end of the first filling tube, and the second casing brake unit is linearly reversibly shiftable along the second filling tube onto its first end and pivoted away from the first end of the second filling tube.

Preferably, the first casing brake holder unit includes a telescopic guidance and a telescopic drive for extending and retracting telescopic guidance, and the second casing brake holder unit includes a telescopic guidance and a telescopic drive for extending and retracting telescopic guidance.

Preferably, the telescopic drives are linear drives, particularly, piston/cylinder drives.

Preferably, the filling tube assembly further comprises a first pivot drive unit, which is provided for pivoting the first casing brake assembly relative to the first filling tube about a pivot point at which the first casing brake assembly is coupled to the revolver plate, and the filling tube assembly further comprises a second pivot drive unit, which is provided for pivoting the second casing brake assembly relative to the second filling tube about a pivot point at which the second casing brake assembly is coupled to the revolver plate.

Preferably, the filling tube assembly is mounted on a framework via a joint portion.

Preferably, the joint portion is mounted on a side wall of the framework.

Preferably, the filling tube assembly is linearly and/or rotatably shiftable such that the filling tube is positioned in front of the clipping machine.

Preferably, a feeding socket is fixed to the revolver plate and facing away from the clipping machine, wherein feeding socket is coaxially aligned with the central axis of the filling tube.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly as mentioned above, gathering means for gathering the filled tubular packaging casing and for forming a plait-like portion thereto, the gathering means including a first displacer unit and a second displacer unit, a clipping device having a first and a second closing tool being reversibly movable between an opened position and a closed position, for applying at least one closure means to the plait-like portion and closing said closure means when the closing tools are in their closed position, a discharge device for discharging the sausage-shaped product just produced out of the clipping machine, and a control unit for controlling at least the clipping machine and the robotic device.

Preferably, the robotic device includes: a gripper unit for gripping a tubular packaging casing supply provided by the storage device, and for transferring said tubular packaging casing supply onto the at least first filling tube of the clipping machine; and a control unit for controlling at least the gripper unit.

Preferably, the storage device includes: at least a first storage assembly in which at least one tubular packaging casing supply is provided for being transferred by the robotic device onto the at least first filling tube of the clipping machine.

Preferably, the first filling tube is movable between a filling position, in which filling material is fed through the first filling tube into the tubular packaging casing stored on the first filling tube, and a refill position, in which a tubular packaging casing supply is transferred onto the first filling tube.

There is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least first filling tube, and transferring by the robotic device a tubular packaging casing supply provided by a storage device onto the at least first filling tube being arranged in the refill position.

There is further disclosed a gripping device for picking up, conveying and delivering a casing tube such as a casing tube of a sausage, the gripping device comprising: a longitudinal base structure which is attached to a handling device by means of a coupling element, preferably in a non-destructively detachable manner, at least two gripper members having each at least one bottom surface and at least one top surface, wherein the gripper members of the gripping device are provided with gripping surfaces, at least two drive means, which are attached to the axial ends of the base structure, for reversibly moving the gripper members between a first position in which the gripper members are positioned on opposite sides of the casing tube to be picked up, and a second position in which the gripper members seize the casing tube to be picked up, and a control unit for simultaneously driving the drive means of the gripper members.

Preferably, the drive means are driven pneumatically, and wherein the drive means are supplied by means of a compressed air supply via a common valve and respective conduits.

Preferably, the conduits from the common valve to the respective drive means are substantially of the same length.

Preferably, a respective flow restrictor is connected to the drive means for compensating unsynchronized movements during opening and closing of the gripper members by the drive means.

Preferably, at least one of the gripper members is translatory and/or rotatory movable with respect to the base structure.

Preferably, each of the gripper members is guided by at least two guide rods.

Preferably, at least one of the gripper members comprises a detection means which is capable of detecting the contact of the casing tube, wherein preferably two opposing gripper members comprise each a detection means.

Preferably, the drive means are connected to the gripper members via at least one connecting bracket having preferably a curved shape.

Preferably, the base structure and/or the at least two gripper members comprise a plurality of through holes and oblong holes for reducing the weight of the gripping device.

There is further disclosed a system for picking up, conveying and delivering a casing tube such as a casing tube of a sausage, the system comprising: a delivering bar on which the respective casing tube is stored, a receiving bar on which the respective casing tube is to be inserted, and a transporting apparatus including a handling device and a gripping device as mentioned above for conveying the casing tube from the delivering bar on the receiving bar.

Preferably, the system further comprises at least one magazine including a plurality of delivering bars, wherein the at least one magazine is mounted on a framework, wherein preferably two magazines are arranged on the framework opposite to each other.

Preferably, the framework is rotatable and configured to rotate the at least one magazine in a picking up position and a loading position, respectively.

Preferably, the at least one magazine comprises a plurality of substantially vertical delivering bars, wherein preferably the delivering bars are arranged in a circle with a predefined distance to each other.

Preferably, the at least one magazine is rotatable and configured to rotate one of the delivering bars in the picking up position.

Preferably, the gripping device of the transporting apparatus is configured to pick up a casing tube from the delivering bar and to deliver said casing tube on the receiving bar which is a filling tube of a clipping machine.

Preferably, the transporting apparatus is attached to the clipping machine, preferably on a back plate of the clipping machine or on a top plate of the clipping machine.

There is further disclosed a magazine for providing at least one tubular-shaped packaging casing suitable for receiving a flowable filling material in the production of sausage-shaped products, in particular sausages, comprising: at least one mandrel for holding at least one packaging casing, wherein the at least one mandrel has a longitudinal mandrel axis, and wherein the at least one mandrel comprises a free end at a first mandrel end, and a conveyor for holding at least one mandrel in an upright position, wherein the conveyor conveys the at least one mandrel from a loading position to a delivery position.

Preferably, at least one retaining element is provided wherein the retaining element is arranged at least at the proximity of the first mandrel end for releasably retaining the packaging casing on the at least one mandrel.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the longitudinal mandrel axis is oriented at least approximately vertically or forms an acute angle with the vertical line.

Preferably, the conveyor is a circulating conveyor belt driven by a motor, wherein the conveyor belt is preferably arranged in an oval configuration.

Preferably, the at least one mandrel has a second mandrel end spaced apart from the first mandrel end along the longitudinal mandrel axis and is attached to a respective mandrel carrier means positioned on the conveyer.

Preferably, the at least one mandrel comprises at least one support element for supporting the packaging casing, the at least one support element is preferably reversibly adjustable in its position along the mandrel.

Preferably, the conveyor is inclined in its longitudinal axis.

Preferably, the at least one retaining element is held by holding means coupled by a shaft to the mandrel carrier means for supporting the holding means and transmitting forces from the mandrel carrier means to the holding means.

Preferably, the carrier means are holding the mandrel, the shaft and the holding means.

There is further disclosed a production system, in particular a clipping machine, for filling and closing a tubular or bag-shaped packaging casing to produce sausage-shaped products, in particular sausages, comprising: at least one magazine as mentioned above, and a robot to pick-up a packaging casing provided at the magazine and to place it at a filling unit.

Preferably, the loading position and the delivery position of the conveyor is separated by a separating wall, wherein the separating wall includes at least one window for passing the conveyor including the at least one mandrel.

Preferably, the separating wall includes at least one sensor to monitor the at least one window of the separating wall for unexpected movements such as a hand of an operator.

Preferably, the at least one sensor is switched off while a mandrel is passing the window of the separating wall.

There is further disclosed a magazine for providing at least one tubular-shaped packaging casing suitable for receiving a flowable filling material in the production of sausage-shaped products, in particular sausages, comprising: a longitudinal magazine axis, at least one mandrel for holding at least one packaging casing, wherein the at least one mandrel has a longitudinal mandrel axis, which extends at least approximately parallel to the longitudinal magazine axis, and wherein the at least one mandrel comprises a free end at a first mandrel end, and at least one retaining element arranged at least at the proximity of the first mandrel end for releasably retaining the packaging casing on the at least one mandrel.

Preferably, the longitudinal magazine axis is oriented at least approximately vertically.

Preferably, the at least one retaining element has at least one first section in which it releases the free end of the at least one mandrel and at least one second section in which the free end of the at least one mandrel is capped by the at least one retaining element.

Preferably, the at least one retaining element is made of a material which is elastic at least in sections.

Preferably, the at least one mandrel has a second mandrel end spaced apart from the first mandrel end along the longitudinal mandrel axis and is attached to mandrel carrier means.

Preferably, the mandrel carrier means are rotatable around the longitudinal magazine axis.

Preferably, the at least one retaining element is held by holding means coupled by a shaft to the mandrel carrier means for supporting the holding means and transmitting forces from the mandrel carrier means to the holding means.

Preferably, the mandrel carrier means have a first diameter and the holding means have a second diameter, and wherein the first diameter is greater than the second diameter.

Preferably, the at least one mandrel is arranged at the mandrel carrier means along a circular ring that is perpendicular to the magazine axis.

Preferably, the circular ring has a ring diameter, and the first diameter is greater than the ring diameter and/or the ring diameter is larger than the second diameter.

Preferably, the at least one mandrel comprises at least one support element for supporting the packaging casing, the at least one support element is preferably reversibly adjustable in its position along the mandrel.

There is further disclosed a revolver comprising at least two magazines as mentioned above, wherein the at least two magazines are arranged on revolver carrier means, which are rotatable around a revolver axis extending at least approximately parallel to the longitudinal magazine axis.

Preferably, the revolver carrier means have at least a first position in which one magazine is arranged in a delivery position and at least a second position in which the further magazine is arranged in a feeding position.

Preferably, comprising at least one separating wall for separating the first position from the second position.

There is further disclosed a production machine, in particular a clipping machine, for filling and closing a tubular or bag-shaped packaging casing to produce sausage-shaped products, in particular sausages, comprising: at least one magazine as mentioned above and/or at least one revolver as mentioned above, and a robot to pick-up a packaging casing provided at the magazine and/or at the revolver and to place it at a filling unit.

There is further disclosed a method for controlling a robotic device by a control unit of a clipping machine, the robotic device being arranged in a system for producing sausage-shaped products by filling a filling material into a tubular packaging casing supply arranged on a filling tube of the clipping machine, wherein the system comprises at least the clipping machine provided preferably with at least a first filling tube and preferably a second filling tube and a first and preferably a second casing brake assembly, a storage device for storing at least one tubular packaging casing supply, and a robotic device for transferring a tubular packaging casing supply from the storage device onto a filling tube of the clipping machine, wherein the control unit is adapted to provide control commands at least to the robotic device, and wherein the robotic device includes a first gripper unit for gripping a tubular packaging casing supply and a second gripper unit for gripping the first casing brake assembly, the method comprises the steps of: removing the casing brake assembly from the filling tube by the second gripper unit; moving the robotic device into a take-up position for taking up by the first gripper unit a tubular packaging casing supply provided in a storage device; gripping the tubular packaging casing supply provided in a storage device by the first gripper unit; moving the robotic device from the take-up position toward the filling tube; transferring the tubular packaging casing supply onto the filling tube by the first gripper unit; releasing the tubular packaging casing supply onto the filling tube of the clipping machine by the first gripper unit, and positioning the casing brake assembly on the filling tube by the second gripper unit.

Preferably, the method further comprises the step of exchanging a first gripper unit of robotic device, for gripping a tubular packaging casing supply by a second gripper unit for gripping the at least first casing brake assembly, for reversibly removing the first casing brake assembly from the at least first filling tube.

Preferably, the method further comprises the step of securing the tubular packaging casing supply on the first filling tube by at least one retainer device.

Preferably, the robotic device includes at least a first sensor unit associated with the first gripper unit, for detecting the position of the gripper unit relative to the tubular packaging casing supply in the storage device and/or for detecting the position of the gripper unit relative to the filling tube.

Preferably, the first gripper unit at least a first and a second gripper element being arranged laterally along a longitudinally extending gripping axis, and at least a second sensor unit, for sensing the gripping force exerted by the at least first and second gripper elements onto the tubular packaging casing supply wherein, preferably, the method further comprising the step of: limiting the gripping force exerted by the at least first and second gripper elements onto the tubular packaging casing supply to a predefined value.

Preferably, the method further comprises the step of moving the first gripper unit along a predefined moving path towards the filling tube of the clipping machine.

Preferably, the method further comprises the step of positioning the first gripper unit with its gripping axis coaxially to the central axis of the filling tube and in front of the filling tube; and shifting the tubular packaging casing supply onto the filling tube by the first gripper unit.

Preferably, the method further comprises the step of detecting by the first sensor unit the position of the tubular packaging casing supply on the filling tube; and releasing the tubular packaging casing supply onto the filling tube.

Preferably, the robotic device is activated upon a signal indicating a specific condition of the clipping machine.

Preferably, the robotic device is deactivated upon a signal indicating a specific condition of the clipping machine and/or a specific condition of the storage device.

Preferably, the clipping machine includes a first filling tube and at least a second filling tube, with one filling tube being arranged in a filling position in which filling material may be fed into the tubular packaging casing, and the other filling tube being arranged in a refill position in which a tubular packaging casing supply is fed onto the filling tube, and wherein the robotic device is activated upon a signal indicating one of the first or second filling tubes being arranged in or moving towards the refill position.

Preferably, the first gripper unit includes at least one further sensor unit for detecting the position of the gripper elements.

There is further disclosed a system for producing sausage-shaped products, like sausages, by filling a filling material into a tubular packaging casing supply arranged on a filling tube of a clipping machine, comprising at least: a storage device for storing at least one packaging casing supply; a clipping machine provided with at least at least a first filling tube and preferably a second filling tube onto each of which a packaging casing supply can be applied; a robotic device for transferring a packaging casing supply from the storage device onto a filling tube of the clipping machine, and having at least a first griper unit for gripping a tubular packaging casing supply, and a second gripper unit for gripping a casing brake assembly of the clipping machine; and a control unit for at least partially controlling the operation of at least the robotic device, wherein the control unit is adapted to control the operation of the robotic device depending on the filling status of a sausage-shaped product to be filled.

Preferably, the filling tubes of the clipping machine are configured such that one filling tube can assume a filling position provided for filling a tubular packaging casing supply with a filling material, and the other filling tube can assume a refilling position provided for loading a new tubular packaging casing supply onto the filling tube, and vice versa, wherein the control unit is configured to control the robotic device such that the robotic device applies a new tubular packaging casing supply onto the filling tube positioned in the refilling position while the other filling tube is in the filling position.

There is further disclosed a robotic device including a gripper unit and arranged in a system for producing sausage-shaped products as mentioned above and controlled by the method as mentioned above.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply and for providing the tubular packaging casing supply to the robotic device, the clipping machine comprises: a filling tube assembly having at least a first filling tube for feeding the filling material into the tubular packaging casing stored on the filling tube and being closed at its first end, at least a first casing brake assembly, associated with the first filling tube, for applying a braking force to the tubular packaging casing while being pulled-off from the first filling tube, and a control unit for controlling at least the clipping machine, the robotic device includes: at least a first gripper unit for gripping a tubular packaging casing supply provided by the storage device, and for transferring said tubular packaging casing supply onto the at least first filling tube of the clipping machine; and at least a second gripper unit for gripping the at least first casing brake assembly, for reversibly removing the at least first casing brake assembly from the at least first filling tube; and the storage device includes: at least a first storage assembly in which at least one tubular packaging casing supply is provided for being transferred by the robotic device onto the at least first filling tube of the clipping machine.

Preferably, a receiving device is provided for at least temporarily receiving the first and/or the second gripper unit, wherein, preferably, the receiving device is provided at the clipping machine.

Preferably, the receiving device includes at least a first holding unit and a second holding unit for at least temporarily accommodating the first and/or second gripper unit.

Preferably, at least one retainer device is provided for temporarily securing the tubular packaging casing supply on the first filling tube in the refill position.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the first gripper unit relative to the storage device and/or the position of the first gripper unit relative to the first and/or second filling tube arranged in the refill position.

Preferably, the robotic device includes a second sensor unit for determining a gripping force applied to the tubular packaging casing supply by the first gripper unit.

Preferably, the storage device includes at least a third sensor unit for detecting the presence or absence of a tubular packaging casing supply in the storage device.

Preferably, the system further including a hanging line arranged downstream the discharge device, for suspending the sausage-shaped products discharged from the clipping machine by the discharge device onto a rod-like element, like a smoking rod, the hanging line includes a control unit for controlling at least the hanging line, wherein, preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

There is further disclosed a method for producing sausage-shaped products in a system as mentioned above, the method comprises the steps of: producing a sausage-shaped product by a clipping machine having an at least first filling tube onto which a tubular packaging casing is stored into which filling material is fed, the method further comprises the steps of: moving the at least first filling tube from a filling position, in which filling material is fed into the tubular packaging casing, into a refill position, in which a tubular packaging casing supply is transferred onto the at least first filling tube, removing by the robotic device a first casing brake assembly from the at least first filling tube being in the refill position, and transferring by the robotic device a tubular packaging casing supply provided by a storage device onto the at least first filling tube being arranged in the refill position.

Preferably, the method further comprises the step of positioning by the robotic device the first casing brake assembly onto the at least first filling tube.

Preferably, the method further comprises the step of exchanging a first gripper unit of the robotic device, for gripping a tubular packaging casing supply by a second gripper unit for gripping the at least first casing brake assembly, for reversibly removing the first casing brake assembly from the at least first filling tube.

Preferably, the method further comprises the step of suspending the sausage-shaped product discharged by the discharge device on a rod-like element provided by the hanging line, wherein, preferably, the clipping machine controls at least partially the robotic device and/or the hanging line.

There is further disclosed a system for producing sausage-shaped products, like sausages, by filling a filling material into a tubular packaging casing, the system includes a clipping machine for producing sausage-shaped product, a robotic device for transferring a tubular packaging casing supply to the clipping machine, and a storage device for storing a tubular packaging casing supply, the clipping machine comprises: a filling tube assembly having at least a first filling tube for feeding the filling material into the tubular packaging casing stored on the filling tube and closed at its first end, at least a first casing brake assembly, associated with the first filling tube, for applying a braking force to the tubular packaging casing while being pulled-off from the first filling tube, and a control unit for controlling at least the clipping machine, the robotic device includes: a gripper unit for gripping a tubular packaging casing supply provided by the storage device, and for transferring said tubular packaging casing supply onto the at least first filling tube of the clipping machine; the storage device includes: at least a first storage assembly in which at least one tubular packaging casing supply is provided for being transferred by the robotic device onto the at least first filling tube of the clipping machine.

Preferably, the control unit of the clipping machine is adapted to at least activate the robotic device for starting the process of refilling tubular packaging casing supply onto the first filling tube.

Preferably, the first filling tube is movable at least between a filling position, in which filling material can be fed through the first filling tube into the tubular packaging casing stored on the first filling tube, and a refill position, in which a tubular packaging casing supply can be transferred onto the first filling tube.

Preferably, the filling tube assembly includes a second filling tube and a second casing brake assembly associated with the second filling tube, wherein, preferably, the first filling tube is arranged in the filling position while the second filling tube is arranged in the refill position.

Preferably, the filling tube assembly further comprises a revolver plate, with at least the first filling tube attached to the revolver plate, the revolver plate being rotatable about a rotation axis for reversibly moving the at least first filling tube from the filling position into the refill position.

Preferably, the robotic device includes a control unit RCU, and wherein the control unit of the clipping machine and the control unit of the robotic device are interconnected such that the robotic device at least partially may be controlled by the control unit of the clipping machine and/or the clipping machine at least partially may be controlled by the robotic device.

Preferably, the robotic device includes at least a first sensor unit at least for detecting the position of the gripper unit relative to the storage device and/or the position of the gripper unit relative to the first and/or second filling tube arranged in the refill position.

Preferably, the robotic device includes a second sensor unit for determining a gripping force applied to the tubular packaging casing supply by the gripper unit.

Preferably, the storage device includes at least a third sensor unit for detecting the presence or absence of a tubular packaging casing supply in the storage device.

Preferably, the system further includes a hanging line arranged downstream the discharge device, for suspending the sausage-shaped products discharged from the clipping machine by the discharge device onto a rod-like element, like a smoking rod, the hanging line includes a control unit for controlling at least the hanging line.

Preferably, the control unit of the hanging line is interconnected with the control unit of the robotic device and/or the control unit of the clipping machine, such that the hanging line is at least partially controlled by the clipping machine and/or the robotic device.

Preferably, the hanging line includes at least one fourth sensor unit for detecting the presence or absence of a sausage-shaped product in the hanging line.

There is further disclosed a method for producing sausage-shaped products in a system as mentioned above, the method comprises the steps of: feeding a filling material through the at least first filling tube of the clipping machine into a tubular packaging casing stored on the at least first filling tube, gathering the filled tubular packaging casing by the gathering means of the clipping machine and forming a plait-like portion thereto, applying at least one closure means to the plait-like portion and closing said closure means by the clipping device of the clipping machine, discharging the sausage-shaped product just produced out of the clipping machine by the discharge device of the clipping machine, the method further comprises the steps of: moving the at least first filling tube from the filling position, in which filling material is fed into the tubular packaging casing, into the refill position, in which a tubular packaging casing supply is transferred onto the at least fist filling tube, and transferring by the robotic device a tubular packaging casing supply provided by a storage device onto the at least first filling tube being arranged in the refill position.

Preferably, the method further comprises the step of suspending the sausage-shaped product discharged by the discharge device on a rod-like element provided by the hanging line.

Preferably, the method further comprises the step of least partially controlling by the clipping machine the robotic device and/or the hanging line.

Further advantages and preferred embodiments of the present invention will be described in the following together with the drawings listed below. The expressions "left", "right", "below" and "above" used in the following description, are referred to the drawings in an alignment such that the reference numbers and the notation of the figures used can be read in normal orientation.
- Fig. 1:: is a schematic view showing the principal design of a clipping machine for producing sausage-shaped products;
- Fig. 2:: is a perspective view to the front side of a system according to the present invention for producing sausage-shaped products, comprising a clipping machine as in Fig. 1, a robotic device shown in a pick-up position, and a storage device;
- Fig. 3:: is a plan view of the system according to Fig. 2;
- Fig. 4:: is a perspective view to the rear side of the system according to Fig. 2, with the robotic device in the pick-up position;
- Fig. 5:: is a perspective view to the rear side of the system according to Fig. 2, with the robotic device in an allocation position;
- Fig. 6:: is a perspective view to the rear side of the system according to Fig. 2, with a gripper unit of the robotic device being coaxially arranged to a filling tube of the clipping machine;
- Fig. 7:: is a perspective view to the rear side of the system according to Fig. 2, with the gripper unit of the robotic device in the release position;
- Fig. 8:: is a detailed plan view to the filling tube assembly of the clipping machine according to Fig. 2;
- Fig. 9:: is a perspective view to the gripper unit of the robotic device in the opened position;
- Fig. 10:: is a perspective view to the gripper unit according to Fig. 9 in the closed position; and
- Fig. 11:: is a perspective front view of the system according to the present invention, comprising a second embodiment of storage device.

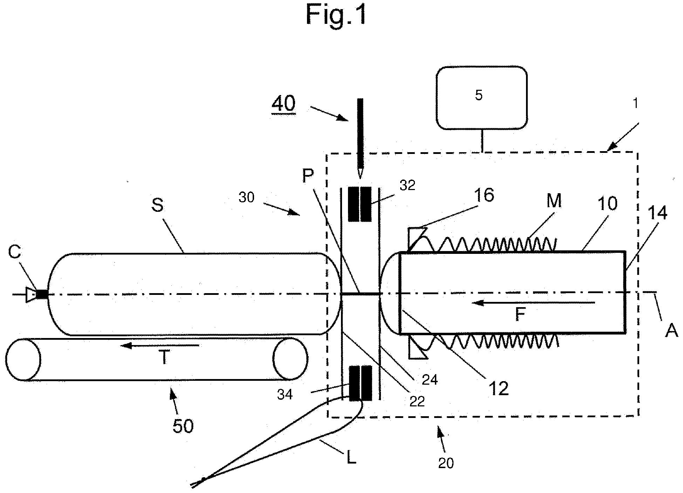

A clipping machine 1 for producing sausage-shaped products S, like sausages, which contain a flowable filling material in a tubular packaging casing supply M, is shown schematically in Fig. 1. Clipping machine 1 comprises a filling tube 10 with a longitudinally and horizontally extending central axis A, having at its left end 12 a discharge opening for discharging the filling material and at its right end 14 a feeding opening for feeding the filling material into filling tube 10 in a feeding direction F to the discharge opening of filling tube 10, for example by a feeding pump of a filler. Moreover, a casing brake assembly 16 is arranged on and coaxially with filling tube 10 in the region of left end 12 of filling tube 10. Filling tube 10 is made of a suitable material, like stainless steel.

A tubular packaging casing supply M made of a thin sheet material is stored on filling tube 10 in a folded and shirred manner like a concertina. From tubular packaging casing supply M, tubular packaging casing material is pulled-off during the process of producing sausage-shaped products S, in particular by the feeding pressure, as the filling material is filled into tubular packaging casing M. Casing brake assembly 16 provides a braking force for allowing a controlled pulling-off of tubular packaging casing M during the filling process.

Clipping machine 1 further comprises gathering means 20 for gathering a filled tubular packaging casing M and forming a plait-like portion P thereto, and a clipping device 30 for closing the filled portion of tubular packaging casing M by applying closure means, like closure clips C, to plait-like portion P. These components are all arranged downstream filling tube 10.

As can be inferred from Fig. 1, clipping device 30 is positioned immediately downstream left end 12 of filling tube 10, and coaxially aligned to filling tube 10. Clipping device 30 comprises a first and a second clipping tool 32, 34 formed by a punch 32 and a die 34. It has to be noted that punch 32 and die 34 may apply and close a single closure clip C for closing just filled tubular packaging casing M, or may apply and close two closure clips C at the same time, a first closure clip C for closing the rear end of just filled tubular packaging casing M for forming a sausage-shaped product S, and a second closure clip C for closing the front end of a tubular packaging casing M subsequently to be filled.

Gathering means 20 include a first displacer unit 22 and a second displacer unit 24, wherein first displacer unit 22 is positioned downstream second displacer unit 34. First and second clipping tools 32, 34 of clipping device 30 may be positioned between first and second displacer units 22, 24, at least for applying and closing one or two closure clips C to plait-like portion P. First displacer unit 22 can reversibly be moved parallel to feeding direction F of the filling material, for forming plait-like portion P of a desired length.

If it is intended to store sausage-shaped products S on a rod-like element, like a smoking rod, e.g. for further processing, like cooking or smoking, a suspension element L, like a suspension loop, may be provided and attached to one end of each of sausage-shaped products S, or at one end of a chain of sausage-shaped products S. Suspension element L may be fed to one of closing tools 32, 34, and may be fixed to the respective end of sausage-shaped product S by means of closure clip C that closes said end of sausage-shaped product S.

For separating a sausage-shaped product S just produced from the remaining tubular packaging casing supply M stored on filling tube 10, a cutting device 40 may be provided. Said cutting device 40 cuts tubular packaging casing M upstream closure clip C that closes the just filled portion of tubular packaging casing M. In case that two closure clips C have been applied to plait-like portion P by clipping device 30, cutting device 40 cuts plait-like portion P between said two closure clips C.

For discharging a sausage-shaped product S just produced from clipping machine 1 in a transportation direction T being at least substantially the same as feeding direction F, a discharge device 50 is arranged downstream clipping device 30, which may be a belt conveyor comprising a conveyor belt and guide rollers.

For storing sausage-shaped products S on a rod-like element, suspension element L is caught by a catching device (not shown), like a catching needle, which guides suspension element L towards the rod-like element.

Clipping machine 1 further comprises a control unit 5 for controlling clipping machine 1, and particularly, the components of clipping machine 1, like first and second clipping tool 32, 34 of clipping device 30, and first and second displacer unit 22, 24 of gathering means 20.

Control unit 5 may also control additional components or machines, which are not part of clipping machine 1, but being involved in the production process. In particular, control unit 5 may control the drive units of said additional components or machines, like a metal detector, which may be provided in the region of filling tube 10, for detecting metal parts in the filling material while fed into tubular packaging casing M, a label feeding device for feeding labels to clipping device 30 for attaching labels to the sausage-shaped product S, a filler for feeding filling material through filling tube 10 of clipping machine 1, or a hanging line for suspending the sausage-shaped products S produced by clipping machine 1 on a rod-like element. These and other additional components and machines may be coupled to control unit CU and controlled by control unit CU, at least partially, e.g. to be adjusted to each other and/or to the kind of sausage-shaped product S to be produced by clipping machine CM.

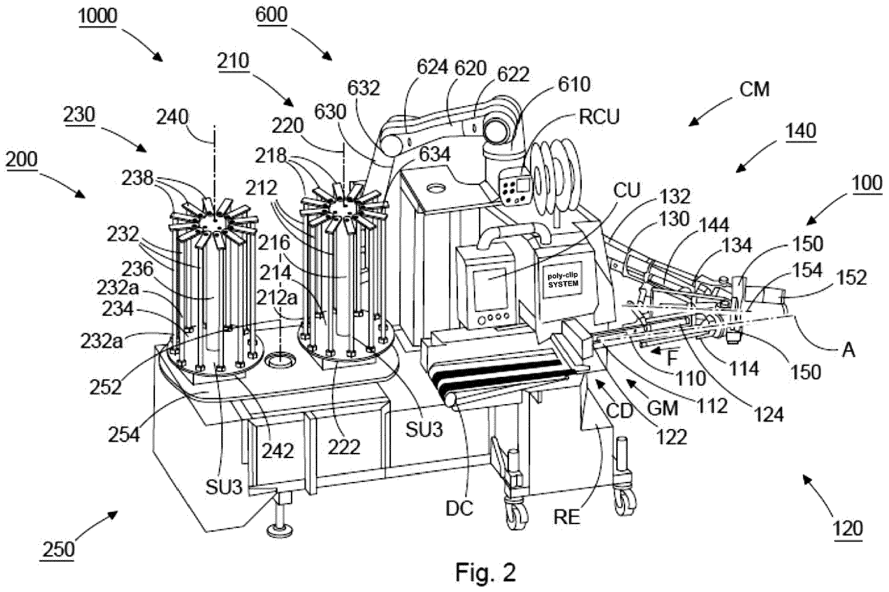

Fig. 2 shows a perspective view to the front side of a system 1000 for producing sausage-shaped products S, which includes a clipping machine CM. Clipping machine CM according to Fig. 2 includes a clipping device CD, gathering means GM, a discharge device DC and a filling tube assembly 100. Clipping machine CM of system 1000 is in principle constructed and operates in the same way as clipping machine 1 described above in connection with Fig. 1. A difference between clipping machine CM of system 1000 and clipping machine 1 described in connection with Fig. 1 is that clipping machine CM operates not only with one filling tube 10, but several filling tubes 110,130, held on filling tube assembly 100, as will be explained in more detail below.

Filling tube assembly 100 comprises a first filling tube 110 having a first end 112 and a second end 114, a first casing brake assembly 120 associated with first filling tube 110, a second filling tube 130 having a first end 132 and a second end 134, and a second casing brake assembly 140 associated with second filling tube 130. First and second filling tubes 110, 130 are pivotally coupled to a revolver plate 150 by their second ends 114, 134 via a respective hinge.

First filling tube 110 faces with its first end 112 towards the closing region of clipping machine CM, in which clipping device CD and gathering means GM are arranged, and in filling direction F. In the arrangement of Fig. 2, first filling tube 110 is in the filling position.

Second filling tube 130 faces with its first end 132 to the rear side of clipping machine CM. Second filling tube 130 is in the refill opposition, in which tubular packaging casing supply M may be arranged or put on second filling tube 130.

First casing brake assembly 120 includes a casing brake unit 122 positioned in the region of first end 112 of first filling tube 110, and pivotally coupled to revolver plate 150 by a first telescopic casing brake holder unit 124. Casing brake holder unit 124 is designed such that casing brake unit 124 may linearly reversibly shifted along first filling tube 110 onto its first end 112 and pivoted away from first end 112 of first filling tube 110.

Second casing brake assembly 140 includes a second casing brake unit 142 pivotally coupled to revolver plate 150 by a second telescopic casing brake holder unit 144, for linearly reversibly shifting casing brake assembly 140 along second filling tube 130 onto its first end 132, and for pivoting casing brake unit 142 away from first end 132 of second filling tube 130.

The pivot movement of filling tubes 110, 130 and casing brake assemblies 120, 140 is executed in a common plane, which is at least approximately horizontally with respect to clipping machine CM.

Filling tube assembly 100 further includes a drive device 152 including a motor, preferably an electric motor and a suitable transmission or gear unit for rotating revolver plate 150 about a rotation axis 154. Rotation axis 154 and filling tubes 110, 130 are arranged in a common plane that is aligned at least approximately horizontally, when one of filling tubes 110; 130 is in the refill position and the respective other filling tube 130; 110 is in the filling position.

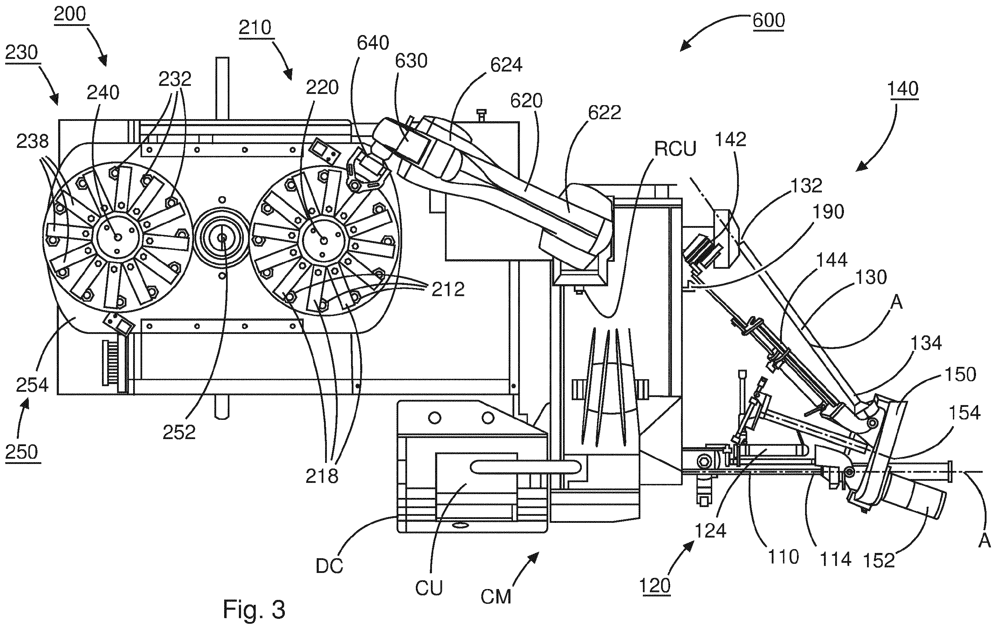

First filling tube 110 may pivoted laterally outwardly in the common plane of rotary axis 154, from the filling position as shown in Fig. 2, into a lateral position as indicated in dotted lines in Fig. 3. In these positions, filling tubes 110, 130 are arranged at least approximately equiangular to rotation axis 154. Rotation axis 154 includes an acute angle with filling tube axis A, as can be seen in Figs. 2, 3.

As explained in conjunction with the principal design of clipping machine 1 shown in Fig. 1, tubular packaging casing supply M is made of a thin sheet of tubular material that is folded and shirred, like a concertina. Tubular packaging casing supply M thereby forms a hollow stick of folded and shirred tubular casing material, which may be transferred from a storage device 200 described below, onto filling tube 110, 130. Tubular packaging casing supply M is preferably closed at one end by a closure clip C, which forms the front end of the first sausage-shaped product S to be produced with this tubular packaging casing supply M. However, it is also possible that a closure clip C, which forms the front end of the first sausage-shaped product S to be produced, is applied to the front end of tubular packaging casing supply M by the clipping device of clipping machine CM, immediately before starting the filling process. For handling tubular packaging casing supply M, it may be of advantage that said tubular packaging casing supply M has an inherent stability that is sufficient for transferring tubular packaging casing supply M at least from a storage device onto filling tube 110, 130 of clipping machine CM.

System 1000 for producing sausage-shaped products S further comprises a storage device 200 for storing at least one, preferably a plurality of tubular packaging casing supplies M to be loaded onto filling tube 110, 130 when arranged in the refill position.

Storage device 200 according to the embodiment shown in Fig. 2 comprises a first storage assembly 210 and a second storage assembly 230. First storage assembly 210 includes a plurality of vertically arranged receiving pins or mandrels 212 of equal length, that are fixed on the upper side of a circular rotation plate 214 by their lower ends, and on a circle concentrically to the center of rotation plate 214. A central post 216 is mounted to rotation plate 214 with its lower end, and is coaxially aligned to a rotation axis 220 of rotation plate 214. Rotation axis 220 extends vertically to rotation plate 214 and through its center.

Each mandrel or receiving pin 212 of first storage assembly 210 is provided with a supporting element 212a in the form of a collar, which are arranged in the region of the lower end of receiving pin 212 (cf. Fig. 2). Said supporting element provides support for a tubular packaging casing supply M arranged on mandrel or receiving pin 212, and which rests with its lower end on supporting element 212a. Supporting elements 212a may be detachably mounted to receiving pins 212, for adapting first storage assembly 210, and particularly the receiving area of receiving pins 212, to the length of tubular packaging casing supplies M, the position of supporting elements 212a such that the upper end of a tubular packaging casing supply coincides with the upper end of the respective receiving pin 212.

At the upper end of central post 216, retaining elements 218 are arranged. Retaining elements 218 are made of an elastic material, like rubber, have an approximately rectangular shape and extend radially outwardly from central post 216 towards the upper ends of receiving pins 212, such that their outer ends are laid up with pretension on the upper ends of receiving pins 212. Storage device 210 further includes a rotary drive 222 coupled to the lower side of rotation plate 214, for rotating first storage assembly 210 about rotation axis 220.

Second storage assembly 230 is at least approximately identically in design like first storage assembly 210, and includes a rotation plate 234 with a vertical rotation axis 240 and a plurality of receiving pins or mandrels 232 arranged vertically with their lower ends to rotation plate 234, and on a circle concentrically to the center of rotation plate 234. A central post 236 is arranged at the center of rotation plate 234 and coaxially aligned to rotation axis 240 of rotation plate 234 and through its center. At the upper end of central post 236, retaining elements 238 are arranged. Retaining elements 238 that are also made of an elastic material, like rubber, have a rectangular shape and extend radially outwardly towards the upper ends of receiving pins 312 and are laid up with pretension on the upper ends of receiving pins 312. Second storage assembly 230 is rotatable about rotation axis 240 by a rotary drive 342 mounted to the lower side of rotation plate 234.

Mandrels or receiving pins 232 of second storage assembly 230 are also provided with support elements 232a, which are arranged in the region of the lower end of receiving pin 232, for supporting a tubular packaging casing supply M arranged on said mandrel or receiving pin 232. Supporting elements 232 of second storage device are identical in design and function like supporting elements 212a of first storage device 210.

In Fig. 2, first storage assembly 210 is positioned in an unloading position or a delivery position, in which tubular packaging casing supply M is unloaded from first storage assembly 210, or picked up, by a robotic device 600 to be transferred onto second filling tube 130 in the refill position, and second storage assembly 230 is in a loading position or feeding position, in which tubular packaging casing supply M is loaded onto storage assembly 230, e.g. by a further robotic device or an operator, which arranges new tubular packaging casing supply M on receiving pins or mandrels 232 of second storage assembly 230.

Storage device 200 further includes a rotation assembly 250, or revolver carrier means, for rotating first and second storage assemblies 210, 230 about a rotation axis 252, or the revolver axis. First and second storage assemblies 210, 230 are mounted on a common rotation table 254 on the same height and with rotation axes 220, 240 are aligned parallel to each other. Rotation table 254 of the revolver carrier means or rotation assembly 250 is rotated about rotation axis or revolver axis 252 by a rotation mechanism arranged below rotation table 254.

For safety reasons, cage elements (not shown) may be provided between first and second storage assemblies 210, 230, which not only separates first storage assembly 210 from second storage assembly 230, but also encloses the maximum radius that can be reached by robotic device 600. This may allow, for example, an operator to load second storage assembly 230 with new tubular packaging casing supplies M while a robotic device 600 removes a tubular packaging casing supply M from first storage assembly 210 and loads it into second filling tube 130, which is in the refill position.

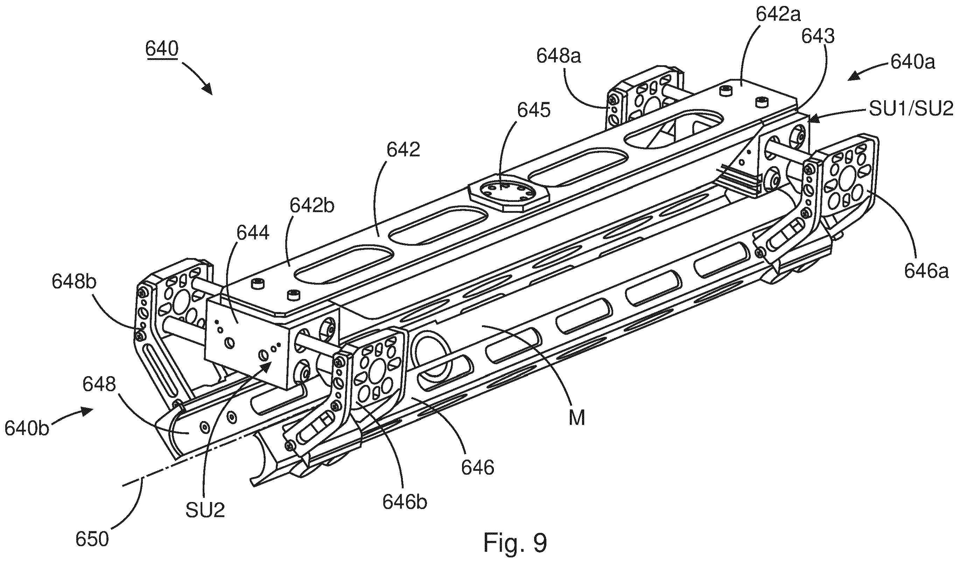

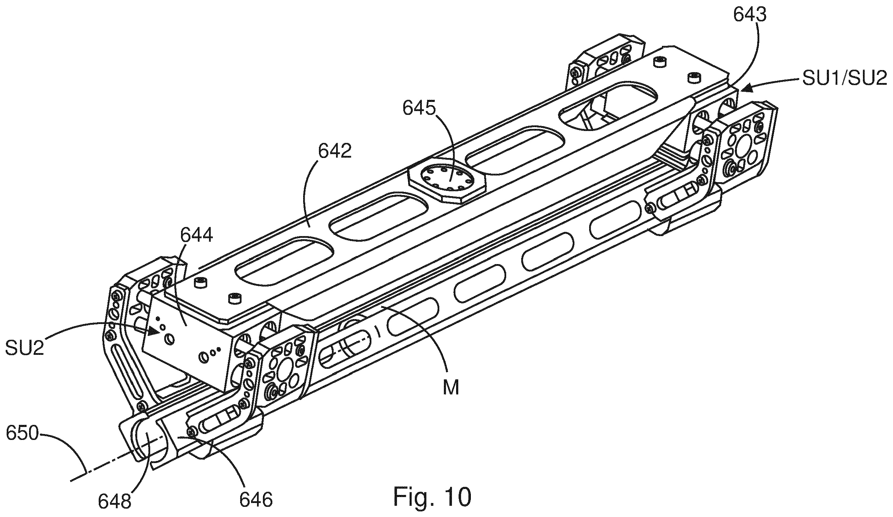

System 1000 for producing sausage-shaped products S further comprises a robotic device 600. Robotic device 600 has a base 610, a first arm 620 having a first end 622 and a second end 624, pivotally coupled to base 610 by its first end 622, and a second arm 630 with a first end 632 and a second end 634. Second arm 630 is pivotally coupled to second end 624 of first arm 620 by its first end 632. Further, robotic device 600 includes a gripper unit 640, which will be discussed in more detail below in connection with Figs. 9 and 10.

Gripper unit 640 for gripping tubular packaging casing supply M is mounted at second end 634 of second arm 630. Gripper unit 640 will be explained in detail in conjunction with Figs. 9 and 10 below. In the shown embodiment, robotic device 600 further comprises a control unit RCU for controlling the movement of robotic device 600. Control unit RCU is mounted to base 610 of robotic device 600. Robotic device 600 is mounted to the framework of clipping machine CM by base 600. Alternatively, a separate base for robotic device 600 may be provided, which is arranged in a defined position relative to clipping machine CM, or which is fixedly coupled to the frame work of clipping machine CM.

In principle, it is also possible for control unit CU of clipping machine CM to control robot device 600 so that control unit RCU can be omitted.

As further can be seen in Fig. 2, clipping machine CM is provided with a recess RE, which enables the passage of filling tubes 110, 130, and particularly their first ends 112, 132, during their movement from the lateral position into the refill position, when being rotated by revolver plate 150 of filling tube assembly 100. Recess RE is provided in the form of a cut-out in the housing of the clipping machine, in the region of the right edge of the front side of the clipping machine CM, below the filling tube 110,130 when in the filling position.

Recess RE provides the advantage that the angle about which filling tubes 110, 130 have to be pivoted outwards into the lateral position, i.e. the angle between the filling position and the lateral position of filling tubes 110, 130, may be smaller compared with such an angle in a clipping machine, which is not provided with such a recess RE. Thereby the danger of a collision between filling tubes 110, 130 and the housing of clipping machine CM is reduced. Moreover, the reduction of the angle about which filling tubes 110, 130 have to be pivoted from the filling position into the lateral position may also reduce the necessary operation space in front of clipping machine CM.

Fig. 3 is a plan view of a system 1000 according to Fig. 2. As can be seen in Fig. 3, first filling tube 110 is in the filling position, in which central axis A of first filling tube 110 coincides with filling direction F. First casing brake assembly 120 is in a position, in which casing brake unit 122 is arranged on first end 112 of first filling tube 110 (cf. Fig. 2).

In contrast, second filling tube 130 is in the refilling position and second casing brake assembly 140 is pivoted away from second filling tube 130. In this position, particularly casing brake unit 142 has left second filling tube 130, such that tubular packaging casing supply M may be fed onto second filling tube 130.

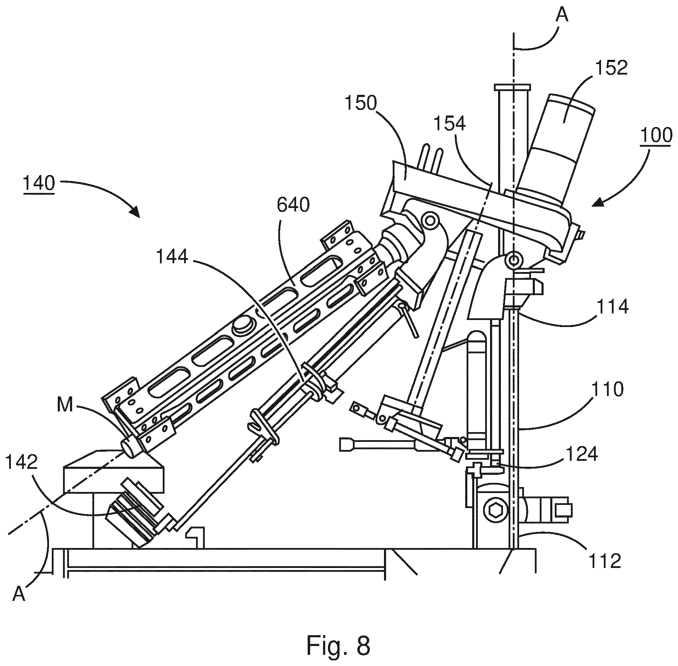

As further can be seen in Fig. 3, at the right side surface of clipping machine CM, an abutment unit 190 is arranged and positioned such that second casing brake assembly 140 abuts against abutment unit 190, when pivoted away from second filling tube 130, as shown in Fig. 3. Abutment unit 190, which can be seen in Fig. 8 in more detail, may further include a sensor unit for detecting second casing brake assembly 140, or first casing brake assembly 120, respectively, in this position, in which tubular packaging casing supply M may be transferred onto second filling tube 130.

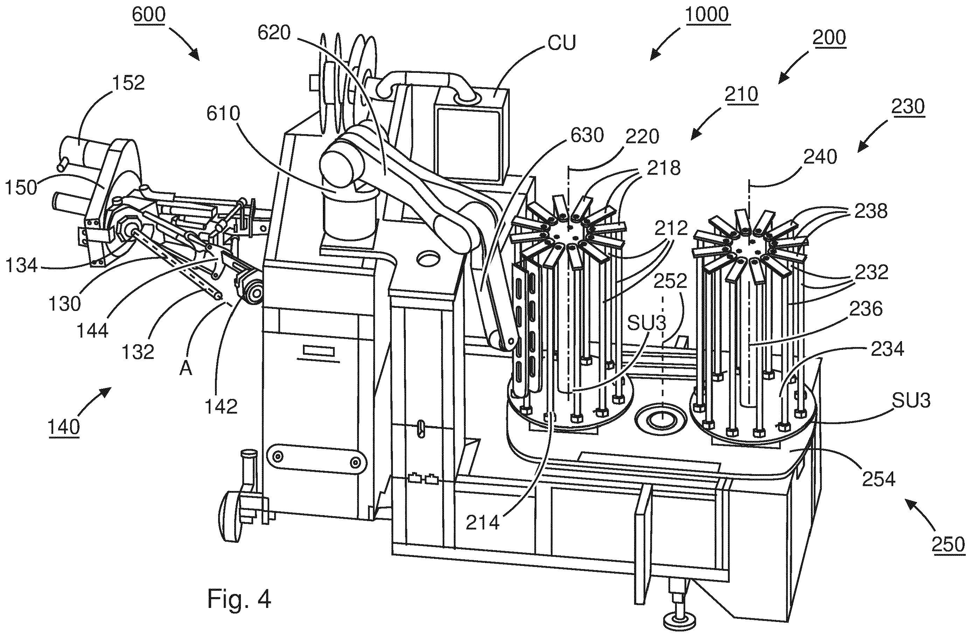

Fig. 4 is a perspective view to the rear side of system 1000 according to Fig. 2. Robotic device 600 is in the take-up or pick-up position. In this position, a tubular packaging casing supply M that is stored on a receiving pin 212 of first storage assembly 210. Said receiving pin 212 is in a provision position corresponding to the take-up position of robotic device 600, and particularly of gripper unit 640, such that gripper unit 640 may grasp tubular packaging casing supply M stored on receiving pin 212.

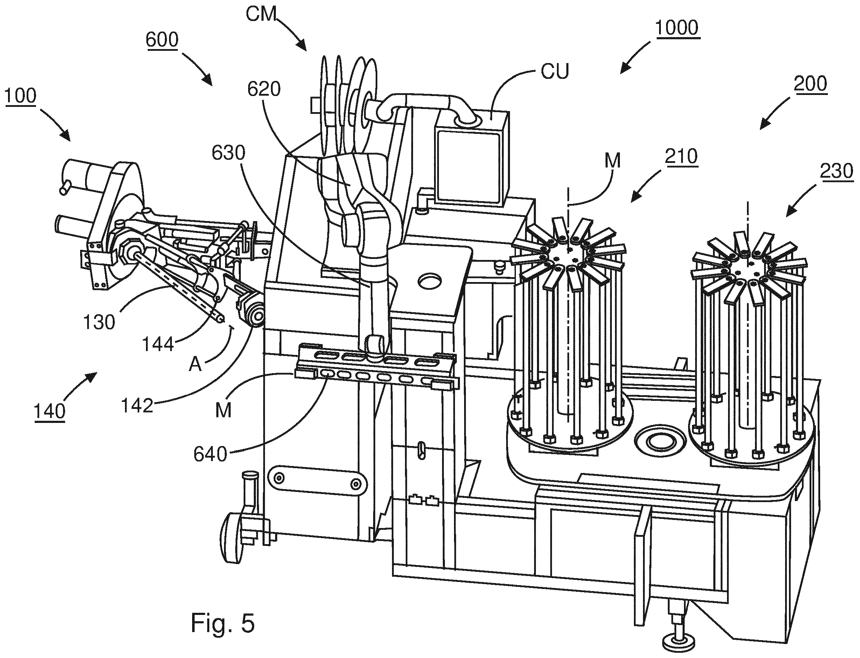

Fig.5 shows robotic device 600 in an allocation position. In this position, tubular packaging casing supply M is removed from first storage assembly 210 and held by robotic device 600 approximately horizontally and centrally behind clipping machine CM, to be transferred next onto second filling tube 130 being arranged in the refill position. Furthermore, first storage assembly 210 has been rotated about rotation axis 220 and about a predefined angle, such that a further receiving pin 212 is in the provision position, with a further tubular packaging casing supply M next to be removed therefrom by robotic device 600.

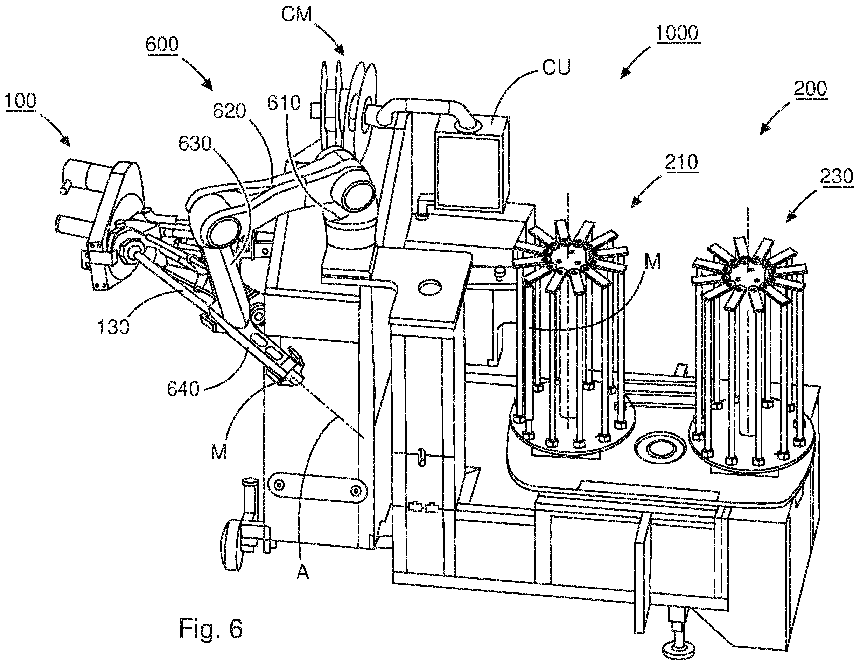

Fig. 6 is a perspective view to the rear side of the system 1000 with gripper unit 640 of robotic device 600 being coaxially arranged to central axis A of second filling tube 130 in the refill position, and onto which tubular packaging casing supply M has to be transferred.

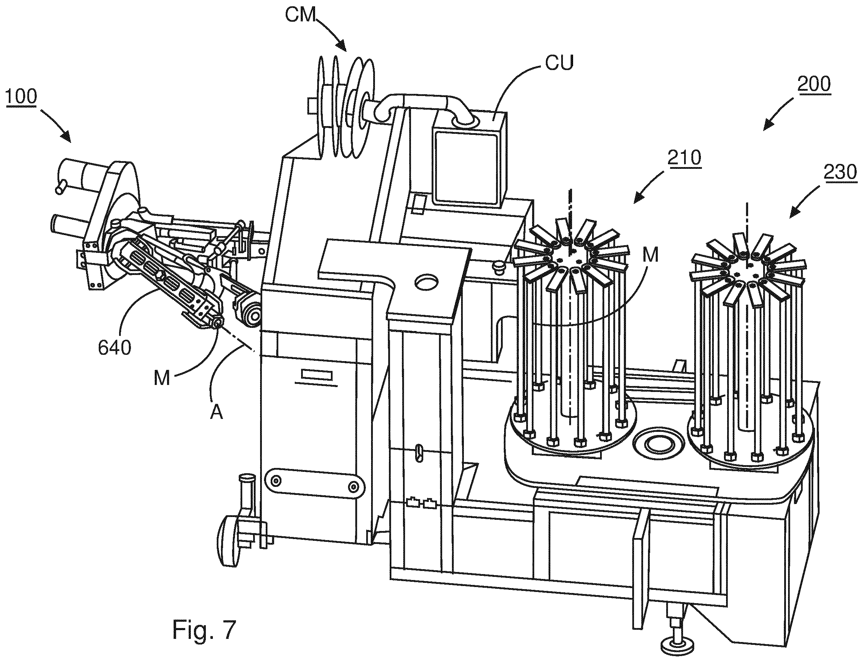

Fig. 7 shows a perspective view to the rear side of the system 1000, and particularly, gripper unit 640 for robotic device 600 in the release position, in which tubular packaging casing supply M is positioned on second filling tube 130 by gripper unit 640. For clarity reasons, in Fig. 7, only gripper unit 640 of robotic device 600 is shown.

From the position shown in Fig. 6, tubular packaging casing supply M is moved linearly along central axis A of second filling tube 130 and shifted thereon by robotic device 600, which thereby moves into the release position shown in Fig. 7. In the release position, gripper unit 640 is activated to move from its closed position (cf. Fig. 9) in which tubular packaging casing supply M is grasped, into its opened position (cf. Fig. 10), for releasing tubular packaging casing supply M onto second filling tube 130.

Fig. 8 is a plan view to filling tube assembly 100 of clipping machine CM according to Fig. 2.

As can be seen in Fig. 8, first filling tube 110 is in the filling position, in which central axis A of filling tube 110 coincides with filling direction F. First casing brake assembly 120 is in a position, in which casing brake unit 122 is arranged on first end 112 of first filling tube 110 (cf. Fig. 2, not visible in Fig. 8).

In contrast, second filling tube 130 is in the refilling position and second casing brake assembly 140 is pivoted away from second filling tube 130, and gripper unit 640 is in the release position with tubular packaging casing supply M held by gripper unit 640 on second filling tube 130.

Fig. 9 is a perspective view to gripper unit 640 of robotic device 600 in the opened position.

Gripper unit 640 has a first end 640a and a second end 640b. Gripper unit 640 comprises a longitudinally extending, essentially rectangular base structure or base plate 642 with a first end 642a that coincides with first end 640a of gripper unit 640, and a second end 642b that coincides with second end 640b of gripper unit 640. On the lower side of the base structure or base plate 642 (according to Fig. 9), and in the regions of its first end 642a, a first drive assembly 643 is arranged that includes two piston/cylinder drives with the pistons extending in a plane parallel to the plane of base plate 642 and at least approximately vertical to its longitudinal extension. A second drive assembly 644, which is identically designed to first drive assembly 643, is mounted to base plate 642 in the regions of its second end 642b, and with the pistons of the piston/cylinder drives extending at least approximately vertical to the longitudinal extension of base plate 640 and in the same plane as the pistons of first drive assembly 643. At the outer ends of the pistons of the piston/cylinder drives of first and second drive assemblies 643, 644, brackets 646a, 646b, 648a, 648b are mounted. Brackets 646a, 646b, 648a, 648b are angled and fixed with one end to the pistons of the piston/cylinder drives such that their other ends face downwards from base plate 642, and brackets 646a, 648a; 646b, 648b at first and second ends 642a, 642b of base plate 642 are directed to each other.

Gripper unit 640 is provided with a first gripper element 646 and a second gripper element 648, each in the form of an angled bar having a V-shaped cross section and a length corresponding to the length of base plate 642. First and second gripper elements 646, 648 are mounted to brackets 646a, 648a; 646b, 648b such that they are aligned parallel to each other and with the open side of the "V" facing to each other. First and second gripper elements 646, 648 may reversibly be moved by first and second drive assemblies 643, 644 between an opened position, as shown in Fig. 9, and a closed position, as shown in Fig. 10. First and second gripper elements 646, 648 are aligned parallel and equidistant to a central axis or gripping axis 650 there between. In the closed position, a tubular packaging casing supply M is grasped by first and second gripper elements 646, 648, and held coaxially to gripping axis 650.

First and second gripper elements 646, 648 are reversibly moved between the opened position and the closed position by first and second drive assemblies 643, 644, which include piston/cylinder drives. The pistons of said piston/cylinder drives do not only drive first and second gripper elements 646, 648, but do also provide linear guidance or linear support, such that the alignment of first and second gripper elements 646, 648 is maintained during the whole process.

As further can be seen in Figs. 9 and 10, at the upper side of base plate 642 and approximately centrally thereon, a connecting unit 645 is arranged, for connecting gripper unit 640 to second end 634 of second arm 630 of robotic device 600. At second end 634 of second arm 630 of robotic device 600, a corresponding connecting unit is arranged, for establishing at least a mechanical connection between second arm 630 and gripper unit 630. Additionally, it is also possible the said connection units enable electrical and/or pneumatic/hydraulic connections to sensor units SU1/SU2, which will be explained in detail below, or first and second drive assemblies 643, 644, respectively.

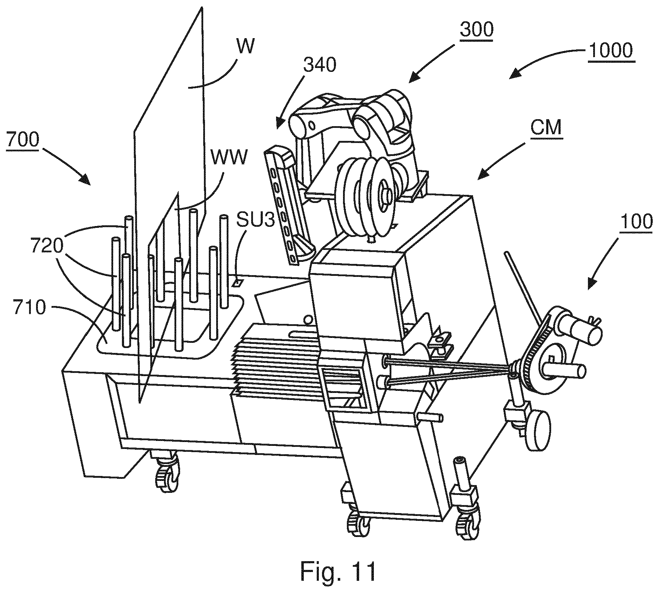

Fig. 11 is a perspective front view of system 1000 according to the present invention, comprising a second embodiment of storage device 200.

System 100 according to Fig. 11 is of similar design as system 100 of Fig. 2, and differs only in the design of storage device 700.

The second embodiment of storage device 700 is arranged at a table 710 formed by a plane of the frame of system 100 and replaces storage device 200.

Storage device 700 comprises a conveyor 710 for holding at least one mandrel or receiving pin 720, wherein the conveyor 710 conveys the at least one mandrel or receiving pin 720 from a provision position, which is the same position as the provision position explained in conjunction with storage device 200, to a loading position arranged at least approximately opposite to the provision position. Conveyor 710 includes an at least approximately horizontally circulating conveyor belt 712 driven by a motor (not shown), wherein conveyor belt 712 is arranged in an approximately oval configuration.

Also, storage device 700 includes a separating wall partition wall W, which is arranged between the provision position and the loading position of storage device 700. Partition wall thereby separates the operation range of robotic device 300 from the operation range of an operator or a further robotic device.

For enabling passage of receiving pins 720, partition wall W has at least one window WW, the size of which corresponds to the space needed for conveyor 710 and mandrels or receiving pins 72 to pass there through. It has to be noted that more than one window WW may be provided in partition wall W. Two windows WW may be provided such that each conveyor run, the forward run moving towards the provision position, and the back run moving backwards to the loading position, has its own window WW, whereby the total open surface in partition wall W may be reduced.

For producing sausage-shaped products S with system 1000, tubular packaging casing material supply M stored on first filling tube 110 and closed at its front end by at least one closure clip C, is filled with filling material which is fed through first filling tube 110 of filling tube assembly 100 into tubular packaging casing M in feeding direction F. Thereby, tubular packaging casing M is pulled off from first filling tube 110 by the feeding pressure of the filling material. First casing brake assembly 120 positioned on first filling tube 110 in the area of its first end 112, exerts a braking force onto tubular packaging casing M while being pulled off from first filling tube 110.

After a predetermined portion of filling material is fed into tubular packaging casing M, filled tubular packaging casing M is gathered and a plait-like portion P is formed to the gathered portion of tubular casing material M by gathering means GM. At least two closure clips C are applied to plait-like portion P and closed by clipping device CD, a first closure clip C for closing the just filled tubular packaging casing M for forming a sausage-shaped product S and a second closure clip C for closing the front end of sausage-shaped product S subsequently to be produced. A suspension element L may be provided and attached to one end of sausage-shaped product S by means of one of closure clips C. For severing the just produced sausage-shaped product S from the remaining tubular packaging casing supply M, plait-like portion P is cut between the two closure clips C, and the sausage-shaped product S just produced may be discharged from clipping machine CM by discharge device DC.

After the tubular packaging casing supply M on first filling tube 110 is used up, first filling tube 110 is pivoted from the filling position (cf. Fig. 2) into the lateral position (cf. Fig. 3). Filling tube assembly 100 is then rotated about its rotation axis 120 about an angle of at least approximately 180°. During this rotational movement of filling tube assembly 100, first filling tube 110 is transferred into the refill position and second filling tube 130, with a tubular packaging casing supply M stored thereon, is moved into the lateral position. Thereafter, second filling tube 130 is pivoted into the filling position, and the production of sausage-shaped products S may be continued. During the production process, a further tubular packaging casing supply M is transferred towards first filling tube 110 now in the refill position, and is stored thereon.

Refill of tubular packaging casing supply M onto second filling tube 130 arranged in the refill position, is executed by robotic device 600, which takes up a tubular packaging casing supply M from first storage assembly 210 of storage device 200 and transfers this tubular packaging casing supply M onto second filling tube 130 in the refill position.

The take-up or pick-up position, the allocation position and the release position as well as the moving paths of robotic device 600 between these positions are stored in control unit RCU of robotic device 600, e.g. in the form of coordinates referring to a respective coordinate system. The moving path of robotic device 600 may be programmed by an operator and transferred to control unit RCU of robotic device 600, or may directly be programmed into control unit RCU via a respective interface. Alternatively, robotic device 600 may manually be guided by an operator along a desired moving path that in the meantime is stored in control unit RCU. In all these cases, the movement of robotic device 600 is controlled by control unit RCU. Alternatively, the positions and the moving path of robotic device 600 may be stored in control unit CU of clipping machine CM, such that control unit CU of clipping machine CM also controls the movement of robotic device 600.

For refilling tubular packaging casing supply M onto second filling tube 130 arranged in the refill position, robotic device 600 is moved into the take-up position (cf. Fig. 4). In the take-up position, first and second gripper elements 646, 648 of gripper unit 640, which are in their opened position, are aligned parallel and laterally to tubular packaging casing supply M stored on receiving pin 212 of first storage assembly 210 in the provision position. Gripper unit 640 is aligned to receiving pin 212 such that first end 640a of gripper unit 640 and the upper end of receiving pin 212 are at least approximately arranged on the same height. In this position, gripping axis 650, at least approximately, coincides with the central axis of receiving pin 212. Then, first and second gripper elements 646, 648 are moved into their closed position for grasping tubular packaging casing supply M.

Tubular packaging casing supply M arranged on receiving pin 212 of storage assembly 210, or on receiving pin 232 of storage assembly 230, respectively, is aligned with its upper end, which may already be closed by a closure clip C, to upper end of receiving pin 212, 232. In this position, retaining element 218, and retaining element 238 respectively, are laid-up with pretension on the upper ends of receiving pins 212, 232, and thereby, abut on the upper end of tubular packaging casing supply M stored thereon. Retaining elements 218, 238 thereby prevent tubular packaging casing supply M stored on receiving pins 212, 232 from unintentional unfolding and unshirring and exceeding upwardly from first and second storage assemblies 210, 230.

For removing tubular packaging casing supply M from receiving pin 212, robotic device 600 moves gripper unit 640 vertically upwards along receiving pin 212, and about a length that corresponds to the length of base plate 642 of gripper unit 640. Thereby, it is ensured that tubular packaging casing M is completely removed from receiving pin 212, and collisions between gripper unit 640 and first storage assembly 210 are securely prevented. The tension applied to the upper end of tubular packaging casing supply M by retaining elements 218, 238 is selected such that tubular packaging casing supply M is securely held on retaining pins 212, 232, but may be removed from receiving pins 212, 232 without being damaged by retaining elements 212, 232.

Robotic device 600 is then moved into the allocation position as shown in Fig. 5, in which gripper unit 640 is arranged at least approximately horizontally on the rear side of clipping machine CM, and with second end 640b of gripper unit 640 faces towards filling tube assembly 100. In this position, tubular packaging casing supply M is held ready close to the refill position of second filling tube 130, whereby the time between the arrangement of second filling tube 130 in the refill position and the placement of tubular packaging casing supply M on second filling tube 130 is shortened, and possible downtimes of the production process are also shortened or prevented.

After second filling tube 130 is positioned in the refill position, or while being moved thereto by rotating filling tube assembly 100 about rotation axis 154 of revolver plate 150, second casing brake assembly 140 is activated such that casing brake unit 142 is shifted along second filling tube 130 to be removed from first end 132 of second filling tube 130, by elongating second telescopic casing brake holder unit 144. Thereafter, casing brake unit 142 is moved away from second filling tube 130 by pivoting casing brake unit 142 together with second casing brake holder unit 144 towards rotation axis 154 of revolver plate 150.

When second filling tube 130 is arranged in the refill position, or a certain time period before, robotic device 600 is moved towards the refill position of second filling tube 130. Gripper unit 640 is positioned with its second end 640b immediately in front of first end 132 of second filling tube 130, with gripping axis 650 being coaxially aligned with central axis A of filling tube 130.

Robotic device 600 is then moved into the release position by shifting gripper unit 640 along central axis A of second filling tube 130, whereby tubular packaging casing assembly M is transferred onto second filling tube 130. Tubular packaging casing supply M is shifted onto second filling tube 130 such that its end that is closed by a closure clip C, the upper end when arranged on receiving pins 212, 232 of first and second storage assemblies 210, 230, abuts or is aligned with first end 132 of second filling tube 130.

Then, second casing brake assembly 140 is activated to pivot back towards second filling tube 130, and to position casing brake unit 142 in front of first end 132 of second filling tube 130.

Gripper unit 640 is moved into its opened position for releasing tubular packaging casing supply M onto second filling tube 130. Second casing brake unit 142 positioned in front of first end 132 of second filling tube 130 prevents tubular packaging casing supply M from unintentional unfolding and unshirring and falling off from filling tube 130.

Subsequently, robotic device 600 is moved away from second filling tube 130 and back into the take-up position for grasping a further tubular packaging casing supply M arranged on a further receiving pin 212 arranged in the provision position. Second casing brake unit 142 is moved onto first end 132 of filling tube 130 by retracting second telescopic casing brake holder unit 144, whereby tubular packaging casing supply M is finally secured on second filling tube 130.

In order to continue the production of sausage-shaped products S when tubular packaging casing supply M of first filling tube 110 is consumed, filling tube assembly 100 is rotated about rotation axis 154 of revolver plate 150, such that first filling tube 110 is transferred into the refill position, and second filling tube 130 is moved into the lateral position in front of clipping machine CM. Filling tube 130 with tubular packaging casing supply M thereon is pivoted into the filling position, and the production of sausage-shaped products S may be continued.

It has to be noted that first casing brake assembly 120 is controlled in the same manner during refilling tubular packaging casing supply M onto second filling tube 130.

For enabling a correct grasping of tubular packaging casing supply M by gripper unit 640, and for exactly position tubular packaging casing supply M on first and second filling tubes 110; 130, the respective positions and movement paths of robotic device 600 and gripper unit 640 may be programmed and implemented into a respective control logic of robotic device 600 in control unit RCU of robotic device 600 or in the control unit CU of clipping machine CM.

In order to enhance the control operations of the refill process, and or further enhancing security, like preventing possible damages to tubular casing packaging supply M, clipping machine CM or robotic device 600, a first sensor unit SU1 is provided to gripper unit 600. First sensor unit SU1 is arranged in the region of first end 640a of gripper unit 640 such that it faces towards gripper elements 646, 648.

Sensor unit SU1 is adapted to detect the position of gripper unit 640 relative to tubular packaging casing supply M during moving robotic device 600 into the take-up position. First sensor unit SU1 may include a suitable sensor, like an optical sensor or a proximity sensor. Furthermore, for detecting or verifying the orientation of gripper unit 640, first sensor unit SU1 may also include a position sensor.

In the same way, first sensor unit SU1 may also be used for detecting the position of gripper unit 640 relative to first filling tube 110; 130 in the refill position, for securing a correct transfer of tubular packaging casing supply M onto filling tube 110, 130.

A second sensor unit SU2 may be provided, which includes a sensor for detecting the gripping force exerted to tubular packaging casing supply M by first and second gripper elements 646, 648. Said sensor may be a force sensor coupled to first and/or second drive assemblies 643, 644 of gripper unit 640. Second sensor unit SU2, particularly, its force sensor, may be integrated in first and/or second drive assemblies 643, 644, or may be attached to gripper elements 646, 648.

Furthermore, at least first and second storage assemblies 210, 230 may be provided with at least one, preferably several third sensor units SU3 in the region of their rotation plates 213, 234. Said sensor units SU3 may detect the presence or absence of tubular packaging casing supply M on receiving pins 212, 232, and particularly on receiving pin 212, 232 that is positioned in the provision position, as well as the rotation position of first and second storage assemblies 210, 230. Thereby, it may be ensured that tubular packaging casing supply M is hold ready in the provision position, for being grasped by robotic device 600 when in the take-up position. Third sensor units SU3 may integrally be formed with central posts 216, 236, or receiving pins 212, 232, and may include a respective sensor element, like a weight sensor or an optical sensor. Alternatively, a third sensor unit SU3 may also be provided on clipping machine CM in close vicinity to the provision position of first storage assembly 210, whereby only one third sensor unit SU3 is necessary, which reduces the control amount. Further alternatively, or additionally, supporting elements 212a, 232a of receiving pins 212, 232 of first and second storage assemblies 210, 230 may be provided with a sensor unit, like sensor unit 3, for detecting the presence or absence of a tubular packaging casing supply M on receiving pins 212, 232. Said sensor unit may include a suitable sensor element, like a photo sensor or a weight sensor.

It has to be noted, that in the Figs. 2 to 10, only the position of sensor units SU1, SU2, SU3 is shown. A specific sensor element or a detailed embodiment of said sensor units SU1, SU2, SU3 is not shown, since the respective sensors may integrally be arranged in the respective units, like in first and second drive assemblies 643, 644, in central posts 216, 236 or receiving pins 212, 232, and thus, sensor units SU1, SU2, SU3 are not visible.

The control operation during refilling tubular packaging casing supply M onto second filling tube 130 may be executed as follows:
Control unit CU of clipping machine CM initially activates robotic device 600 for starting refill of tubular packaging casing supply M onto second filling tube 130 in the refill position. Said activation signal may be output to robotic device 600 on the basis of a signal received from a sensor unit (not shown) that is coupled to filling tube assembly 100. Said sensor unit may output a signal corresponding to a specific position of filling tube assembly 100, e.g. in which filling tube 110; 130 moving towards the refill position, is in a predefined angular position relative to the refill position.

Upon receipt of said signal of the sensor unit coupled to filling tube assembly 100, robotic device 600 is activated. Robotic device 600 being in the allocation position, is moved into a position as shown in Fig. 6, in which gripping axis 650 of gripper unit 640 is coaxially aligned with central axis A of second filling tube 130 meanwhile being in the refill position. Sensor unit SU1 detects the position of gripper unit 640 relative to second filling tube 130. In the case that gripper unit 640 is correctly positioned in front of second filling tube 130, a signal is provided by sensor unit SU1 to control unit RCU of robotic device 600, causing robotic device 600 to shift gripper unit 640 along the central axis of second filling tube 130, such that tubular packaging casing supply M is transferred onto second filling tube 130. While shifting tubular packaging casing supply M onto second filling tube 130, first sensor unit SU1 may further detect the position of first end 640a of gripper unit 640 relative to second filling tube 130, and may stop robotic device 600 when first end 640a, and thus, the end of tubular casing supply M, respectively, has reached first end 132 of second filling tube 130. Alternatively or additionally, this position may be defined in the programming of robotic device 600, which automatically stops in this position.

The signal of sensor unit SU1, indicating gripper unit 640 in the correct position on second filling tube 130, may also be used to activate second casing brake assembly 140 being in the position shown in Fig. 8, to pivot towards second filling tube 130, and to move second casing brake unit 142 towards first end 132 of second filling tube 130.

Subsequently, first and second drive assemblies 643, 644 of gripper unit 640 are activated to move gripper elements 646, 648 into their opened position, to release tubular packaging casing supply M onto second filling tube 130. Tubular packaging casing supply M is secured on filling tube 130 against unintentional unfolding by second casing brake unit 142.

Second sensor unit SU2 may confirm that tubular packaging casing supply M has been released, e.g. since no further force is applied to tubular packaging casing supply M by gripper elements 646, 648 and/or gripper elements 646, 648 are in a predefined position, and gripper unit 640 is removed from filling tube 130.

Thereafter, second casing brake unit 142 is shifted onto first end 132 of second filling tube 130 by retracting second telescopic casing brake holder unit 144 about a certain length. A signal for activating second casing brake assembly 140 may be received from first sensor unit SU1 that detects a respective position of gripper unit 640 relative to second filling tube 130 after being removed from second filling tube 130.

Robotic device 600 is then moved towards its take-up positon.

Upon a respective signal indicating that tubular packaging casing supply M on first filling tube 110 arranged in the filling position is used up or consumed, filling tube assembly 100 is rotated about rotation axis 154 controlled by control unit CU of clipping machine CM, for moving second filling tube 130 with tubular packaging casing supply M stored thereon, toward the filling position.

In the meantime, a receiving pin 212 of first storage assembly 210 with a tubular packaging casing supply M stored thereon, is positioned in the provision position. Third sensor unit SU3 detects the presence of tubular packaging casing supply M on said receiving pin 212, and outputs a respective signal to control unit CU of clipping machine CM, or alternatively to control unit RCU of robotic device 600. In the case that no tubular packaging casing supply M is stored on said receiving pin 212, sensor unit SU3 may cause to rotate first storage assembly 210 such that the next receiving pin 212 is moved into the provision position. These steps may be executed until a receiving pin 212 with a tubular packaging casing supply M stored thereon, is in the provision position. Alternatively, robotic device 600 may be stopped, and a respective signal may be sent to an operator.

Furthermore, in the case that no receiving pin 212 of first storage assembly is provided with a tubular packaging casing supply M, rotation assembly 250 may be activated to rotate storage device 200 about rotation axis 252 and about an angle of 180°, to move first storage assembly 210 from the unloading position into the loading position, in which tubular packaging casing supply M is loaded onto receiving pins 212. Thereby, second storage assembly 230 is moved from the loading position into the unloading position in which one of its receiving pins 232 may be placed in the provision position.

When arriving at the take-up position, first sensor unit SU1 of gripper unit 640 detects receiving pin 212 in the provision position and the position of gripper unit 640 relative to said receiving pin 212. Robotic device 640 positions gripper unit 640 such that gripper elements 646, 648 are positioned laterally and parallel to receiving pin 212 with tubular packaging casing supply M thereon in the provision position. Gripping axis 650 is aligned coaxially with the central axis of receiving pin 212. Gripper elements 646, 648 are then moved towards each other into their closed position, by first and second drive assemblies 643, 644, for grasping tubular packaging casing supply M stored on receiving pin 212. Second sensor unit SU2 detects the closing force exerted by gripper elements 646, 648 onto tubular packaging casing supply M. After a predetermined force value is reached, first and second drive assemblies 643, 644 are stopped. Gripper unit 640 is then moved upwardly along receiving pin 212 until gripper unit 640 is positioned with its second end 640b above the upper end of receiving pin 212. Thereafter, robotic device 600 is moved into the allocation position, from which the refill operation for refilling tubular packaging casing supply M onto first filling tube 110 is executed in the same manner as described above in conjunction with second filling tube 130.

As disclosed above, the moving paths between the positions of robotic device 600 may fixedly be programmed according to selected conditions, e.g. such that robotic device 600 is moved on the shortest path or in the shortest time. Alternatively, or additionally, robotic device 600 may be provided with additional sensors, like proximity sensors, that may sense the surrounding area of robotic device 600, for detecting possible barriers on the moving path of robotic device 600, like parts of clipping machine CM or other peripheral machines, and for preventing collisions therewith. Further additionally, the information provided by these additional sensors may be used to optimize the moving path of robotic device 600, by an operator that varies the moving path or by self-learning of robotic device 600.

Furthermore, alternative moving paths and/or positions of robotic device 600 may be stored in control unit RCU of robotic device 600 or in control unit CU of clipping machine CM. Said alternative moving paths and/or positions of robotic device 600 may be used for controlling clipping machine CM and robotic device 600 dependent on the kind of sausage-shaped products S to be produced, e.g. with regard to a varied casing material consumption, or dependent on the kind of peripheral machines used, like alternative filling tube assemblies or storage devices. Gripper unit 640 is replaceable mounted to second end 634 of second arm 630 of robotic device 600. Thus, replacing gripper unit 640 by an alternative gripper unit, e.g. in adaption to the size of tubular packaging casing supply M, it may also be necessary to vary the positions and/or the moving path of robotic device 600.

Moreover, sensor units SU1, SU2, SU3 and any additional sensor unit may be coupled to control unit CU of clipping machine CM, for activating clipping machine CM and/or robotic device 600, or for deactivating clipping machine CM and/or robotic device 600, e.g. in case of missing tubular packaging casing supply M or possible miss positioning of components of system 1000. However, it is also possible that one or more of sensor units SU1, SU2, SU3 and any additional sensor unit are coupled to control unit RCU of robotic device 600 for activating or deactivating robotic device 600 if necessary.

As explained above, robotic device 600 may be placed in the allocation position, to hold ready a tubular packaging casing supply M close to the refill position for shorten the refill time. However, dependent on the size of tubular packaging casing supply M and/or the time in which said tubular packaging casing supply M is used up, an allocation positon may be omitted, and robotic device 600 may directly be moved from the take-up position into the release position.

Furthermore, in conjunction with Figs. 2 to 8, filling tube assembly 100 has been described as including two filling tubes 110, 130. It has to be noted that the process of refilling tubular packaging casing supply onto a filling tube as disclosed above, may also be executed in a system with a filling tube assembly that includes only one filling tube, or that has more than two filling tubes, like three or four filling tubes. In such a case, only the angle of rotation for transferring a filling tube into the refill position varies, whereas the remaining steps and control operations may be executed as described above.

### Reference signs

- 1: clipping machine
- 5: control unit
- 10: filling tube
- 12: first end of the filling tube
- 14: second end of the filling tube
- 16: casing brake assembly
- 20: gathering means
- 22: first displacer unit
- 24: second displacer unit
- 30: clipping device
- 32: first clipping tool
- 34: second clipping tool
- 40: cutting device
- 50: discharge device
- 100: filling tube assembly
- 110: first filling tube
- 112: first end of first filling tube
- 114: second end of first filling tube
- 120: first casing brake assembly
- 122: first casing brake unit
- 124: first telescopic casing brake holder unit
- 130: second filling tube
- 132: first end of second filling tube
- 134: second end of second filling tube
- 140: second casing brake assembly
- 142: second casing brake unit
- 144: second telescopic casing brake holder unit
- 150: revolver plate
- 152: drive device
- 154: rotation axis
- 200: storage device
- 210: first storage assembly
- 212: receiving pins
- 212a: supporting element
- 214: rotation plate
- 216: central post
- 218: retaining elements
- 230: second storage assembly
- 220: rotation axis
- 222: rotary drive
- 232: receiving pins
- 232a: supporting element
- 234: rotation plate
- 236: central post
- 238: retaining elements
- 240: rotation axis
- 242: rotary drive
- 250: rotation assembly
- 252: rotation axis
- 254: rotation table
- 600: robotic device
- 610: base
- 620: first arm
- 622: first end of first arm
- 624: second end of first arm
- 630: second arm
- 632: first end of second arm
- 634: second end of second arm
- 640: gripper unit
- 640a: first end of the gripper unit
- 640b: second end of the gripper unit
- 642: base plate
- 642a: first end of the base plate
- 642b: second end of the base plate
- 643: first drive assembly
- 644: second drive assembly
- 645: connecting unit
- 646: first gripper element
- 646a, 646b: brackets
- 648: second gripper element
- 648a, 648b: brackets
- 650: gripping axis
- 1000: system for producing sausage-shaped products
- A: central axis of filling tubes
- C: closure clip
- F: filling direction
- L: suspension element
- M: tubular packaging casing / tubular packaging casing supply
- P: plait-like portion
- S: sausage-shaped product
- T: transportation direction
- CM: clipping machine
- CU: control unit of the clipping machine
- CD: clipping device
- GM: gathering means
- DC: discharge device
- RCU: control unit of the robotic device
- SU1: first sensor unit
- SU2: second sensor unit
- SU3: third sensor unit

## Claims

1. A method for controlling a robotic device (600) by a control unit (CU) of a clipping machine (CM), the robotic device (600) being arranged in a system (1000) for producing sausage-shaped products (S) by filling a filling material into a tubular packaging casing supply (M) arranged on a filling tube (110, 130) of the clipping machine (CM), wherein the system (1000) comprises at least the clipping machine (CM) provided with at least two filling tubes (110, 130), a storage device (200) for storing at least one tubular packaging casing supply (M), and a robotic device (600) for transferring a tubular packaging casing supply (M) from the storage device (200) onto a filling tube (110, 130) of the clipping machine (CM), wherein the control unit (CU) is adapted to provide control commands at least to the robotic device (600), and wherein the robotic device (600) includes a gripper unit (640) for gripping a tubular packaging casing supply (M),
the method comprises the steps of:
- moving the robotic device (600) into a take-up position for taking up by the gripper unit (640) a tubular packaging casing supply (M) provided in a storage device (200);
- gripping the tubular packaging casing supply (M) provided in a storage device (200) by the gripper unit (640);
- moving the robotic device (600) from the take-up position toward the filling tube (10);
- transferring the tubular packaging casing supply (M) onto the filling tube (10) by the gripper unit (640); and
- releasing the tubular packaging casing supply (M) onto the filling tube (110) of the clipping machine (CM) by the gripper unit (640).

2. The method according to claim 1,
wherein the robotic device (600) includes at least a first sensor unit (SU1) associated with the gripper unit (640), for detecting the position of the gripper unit (640) relative to the tubular packaging casing supply (M) in the storage device (200) and/or for detecting the position of the gripper unit (640) relative to the filling tube (110).

3. The method according to claim 1 or 2,
wherein the gripper unit (640) includes at least a first and a second gripper element (646, 648) being arranged laterally along a longitudinally extending gripping axis (650), and at least a second sensor unit (SU2), for sensing the gripping force exerted by the at least first and second gripper elements (646, 648) onto the tubular packaging casing supply (M) wherein, preferably, the method further comprising the step of:
- limiting the gripping force exerted by the at least first and second gripper elements (646, 648) onto the tubular packaging casing supply (M) to a predefined value.

4. The method according to any of claims 1 to 3, further comprising the step of:
- moving the gripper unit (640) along a predefined moving path towards the filling tube (130) of the clipping machine (CM).

5. The method according to any of claims 1 to 4, further comprising the step of:
- position the gripper unit (640) with its gripping axis (650) coaxially to the central axis of the filling tube (110) and in front of the filling tube (130); and
- shifting the tubular packaging casing supply (M) onto the filling tube (130) by the gripper unit (640).

6. The method according to claim 5, when dependent on claim 2, further comprising the steps of:
- detecting by the first sensor unit (SU1) the position of the tubular packaging casing supply (M) on the filling tube (130); and
- releasing the tubular packaging casing supply (M) onto the filling tube (130).

7. The method according to any of claims 1 to 6,
wherein filling tube (10) of the clipping machine (CM) is provided with a casing brake assembly (120),
the method further comprises the step of:
- positioning the casing brake assembly (140) in front of the filling tube (130) after the tubular packaging casing supply (M) has been shifted onto the filling tube (130) and prior the tubular packaging casing supply (M) has been released onto the filling tube (130) by the gripper unit (640).

8. The method according to any one of claims 1 to 7,
wherein the robotic device (600) is activated upon a signal indicating a specific condition of the clipping machine (CM) and/or upon a signal indicating a specific condition of the storage device (200).

9. The method according to any one of claims 1 to 8,
wherein the robotic device (600) is deactivated upon a signal indicating a specific condition of the clipping machine (CM) and/or a specific condition of the storage device (200).

10. The method according to any one of claims 1 to 9,
wherein the clipping machine (CM) includes a first filling tube (110) and at least a second filling tube (130), with one filling tube (110; 130) being arranged in a filling position in which filling material is fed into the tubular packaging casing (M), and the other filling tube (130; 110) being arranged in a refill position in which a tubular packaging casing supply (M) is fed onto the filling tube (130), and
wherein the robotic device (600) is activated upon a signal indicating one of the first or second filling tubes (110; 130) being arranged in or moving towards the refill position.

11. The method according to any one of claims 1 to 10,
wherein the gripper unit (640) includes at least one further sensor unit for detecting the position of the gripper elements (646, 648).

12. A system for producing sausage-shaped products (S), like sausages, by filling a filling material into a tubular packaging casing supply (M) arranged on a filling tube (110, 130) of a clipping machine (CM), comprising at least:
- a storage device (200) for storing at least one packaging casing supply (M);
- a clipping machine (CM) provided with at least two filling tubes (110, 130) onto each of which a packaging casing supply (M) can be applied;
- a robotic device (600) for transferring a packaging casing supply (M) from the storage device (200) onto a filling tube (110, 130) of the clipping machine (CM); and
- a control unit (CU) for controlling the operation of at least the robotic device (600),
wherein the control unit (CU) is adapted to control the operation of the robotic device depending on the filling status of a sausage-shaped product to be filled.

13. The system according to claim 12,
wherein the filling tubes (110, 130) of the clipping machine (CM) are configured such that one filling tube (110) can assume a filling position provided for filling a tubular packaging casing supply (M) with a filling material, and the other filling tube (130) can assume a refilling position provided for loading a new tubular packaging casing supply (M) onto the filling tube (130), and vice versa, wherein the control unit (CU) is configured to control the robotic device (600) such that the robotic device (600) applies a new tubular packaging casing supply (M) onto the filling tube (130) positioned in the refilling position while the other filling tube (110) is in the filling position.

14. The system according to claim 12 or 13,
wherein the filling tubes (110, 130) of the clipping machine (CM) are configured such that one filling tube (110) can assume a filling position provided for filling a tubular packaging casing supply (M) with a filling material, and the other filling tube (130) can assume a refilling position provided for loading a new tubular packaging casing supply (M) onto the filling tube (130), and vice versa, wherein the first filling tube (110) is provided with a first casing brake unit (122) reversibly removable from the first filling tube (110) and the second filling tube (130) is provided with a second casing brake unit (142) reversibly removable from the second filling tube (130), and wherein the control unit (CU) is configured to release the tubular packaging casing supply (M) fed to the filling tube (130) located in the refilling position when the respective casing brake unit (142) is positioned in front of the filling tube (130) shortly before being pushed onto the latter.

15. Use of a robotic device (600) including a gripper unit (640), controlled by the method according to claims 1 to 11 and arranged in a system (1000) for producing sausage-shaped products (S) according to claims 12 to 14.

## Patentansprüche

1. Verfahren zum Steuern einer Robotervorrichtung (600) durch eine Steuereinheit (CU) einer Clipmaschine (CM), wobei die Robotervorrichtung (600) in einem System (1000) zum Herstellen wurstförmiger Produkte (S) durch Einfüllen eines Füllguts in einen Schlauchverpackungshüllenvorrat (M), der auf einem Füllrohr (110, 130) der Clipmaschine (CM) angeordnet ist, angeordnet ist, wobei das System (1000) wenigstens die Clipmaschine (CM) umfasst, die mit wenigstens zwei Füllrohren (110, 130) versehen ist, eine Lagervorrichtung (200) zum Lagern wenigstens eines Schlauchverpackungshüllenvorrats (M), und eine Robotervorrichtung (600) zum Überführen eines Schlauchverpackungshüllenvorrats (M) von der Lagervorrichtung (200) auf ein Füllrohr (110, 130) der Clipmaschine (CM), wobei die Steuereinheit (CU) dazu eingerichtet ist, Steuerbefehle wenigstens für die Robotervorrichtung (600) bereitzustellen, und wobei die Robotervorrichtung (600) eine Greifereinheit (640) zum Greifen eines Schlauchverpackungshüllenvorrats (M) umfasst,
wobei das Verfahren die Schritte umfasst:
- Bewegen der Robotervorrichtung (600) in eine Aufnahmeposition zum Aufnehmen eines in einer Lagervorrichtung (200) bereitgestellten Schlauchverpackungshüllenvorrats (M) durch die Greifereinheit (640);
- Greifen des in einer Lagervorrichtung (200) bereitgestellten Schlauchverpackungshüllenvorrats (M) durch die Greifereinheit (640);
- Bewegen der Robotervorrichtung (600) von der Aufnahmeposition in Richtung zu dem Füllrohr (10);
- Überführen des Schlauchverpackungshüllenvorrats (M) auf das Füllrohr (10) durch die Greifereinheit (640); und
- Freigeben des Schlauchverpackungshüllenvorrats (M) auf das Füllrohr (110) der Clipmaschine (CM) durch die Greifereinheit (640).

2. Verfahren nach Anspruch 1,
wobei die Robotervorrichtung (600) wenigstens eine erste, der Greifereinheit (640) zugeordnete Sensoreinheit (SU1) zum Erfassen der Position der Greifereinheit (640) relativ zu dem Schlauchverpackungshüllenvorrat (M) in der Lagervorrichtung (200) und/oder zum Erfassen der Position der Greifereinheit (640) relativ zu dem Füllrohr (110) umfasst.

3. Verfahren nach Anspruch 1 oder 2,
wobei die Greifereinheit (640) wenigstens ein erstes und ein zweites Greiferelement (646, 648), die seitlich entlang einer in Längsrichtung verlaufenden Greifachse (650) angeordnet sind, und wenigstens eine zweite Sensoreinheit (SU2) zum Erfassen der von dem wenigstens ersten und dem zweiten Greiferelement (646, 648) auf den Schlauchverpackungshüllenvorrat (M) ausgeübten Kraft umfasst, wobei das Verfahren vorzugsweise ferner den Schritt umfasst:
- Begrenzen der von dem wenigstens ersten und dem zweitem Greifelement (646, 648) auf den Schlauchverpackungshüllenvorrat (M) ausgeübten Kraft auf einen vordefinierten Wert.

4. Verfahren nach einem der Ansprüche 1 bis 3, das ferner den Schritt umfasst:
- Bewegen der Greifereinheit (640) entlang eines vordefinierten Bewegungspfads in Richtung zu dem Füllrohr (130) der Clipmaschine (CM).

5. Verfahren nach einem der Ansprüche 1 bis 4, das ferner den Schritt umfasst:
- Positionieren der Greifereinheit (640) mit ihrer Greifachse (650) koaxial zur Mittelachse des Füllrohrs (110) und vor dem Füllrohr (130); und
- Schieben des Schlauchverpackungshüllenvorrats (M) auf das Füllrohr (130) mittels der Greifereinheit (640).

6. Verfahren nach Anspruch 5, wenn abhängig von Anspruch 2, das ferner die Schritte umfasst:
- Erfassen der Position des Schlauchverpackungshüllenvorrats (M) auf dem Füllrohr (130) durch die erste Sensoreinheit (SU1); und
- Freigeben des Schlauchverpackungshüllenvorrats (M) auf das Füllrohr (130).

7. Verfahren nach einem der Ansprüche 1 bis 6,
wobei das Füllrohr (10) der Clipmaschine (CM) mit einer Darmbremsanordnung (120) versehen ist,
wobei das Verfahren ferner den Schritt umfasst:
- Positionieren der Darmbremsanordnung (140) vor dem Füllrohr (130), nachdem der Schlauchverpackungshüllenvorrat (M) auf das Füllrohr (130) geschoben worden ist und bevor der Schlauchverpackungshüllenvorrat (M) durch die Greifereinheit (640) auf das Füllrohr (130) freigegeben worden ist.

8. Verfahren nach einem der Ansprüche 1 bis 7,
wobei die Robotervorrichtung (600) bei einem Signal, das einen bestimmten Zustand der Clipmaschine (CM) anzeigt, und/oder bei einem Signal, das einen bestimmten Zustand der Lagervorrichtung (200) anzeigt, aktiviert wird.

9. Verfahren nach einem der Ansprüche 1 bis 8,
wobei die Robotervorrichtung (600) bei einem Signal, das einen bestimmten Zustand der Clipmaschine (CM) und/oder einen bestimmten Zustand der Lagervorrichtung (200) anzeigt, deaktiviert wird.

10. Verfahren nach einem der Ansprüche 1 bis 9,
wobei die Clipmaschine (CM) ein erstes Füllrohr (110) und wenigstens ein zweites Füllrohr (130) aufweist, wobei ein Füllrohr (110; 130) in einer Füllposition angeordnet ist, in der Füllgut in die schlauchförmige Verpackungshülle (M) gefördert wird, und das andere Füllrohr (130; 110) in einer Nachladeposition angeordnet ist, in der ein Schlauchverpackungshüllenvorrat (M) auf das Füllrohr (130) geladen wird, und
wobei die Robotervorrichtung (600) bei einem Signal aktiviert wird, das anzeigt, dass eines von dem ersten oder dem zweiten Füllrohr (110; 130) in der Nachladeposition angeordnet ist oder sich in Richtung zu dieser bewegt.

11. Verfahren nach einem der Ansprüche 1 bis 10,
wobei die Greifereinheit (640) wenigstens eine weitere Sensoreinheit zum Erfassen der Position der Greiferelemente (646, 648) umfasst.

12. System zur Herstellung wurstförmiger Produkte (S), wie Würste, durch Einfüllen eines Füllguts in einen Schlauchverpackungshüllenvorrat (M), der auf einem Füllrohr (110, 130) einer Clipmaschine (CM) angeordnet ist, umfassend wenigstens:
- eine Lagervorrichtung (200) zum Lagern wenigstens eines Verpackungshüllenvorrats (M);
- eine Clipmaschine (CM) mit wenigstens zwei Füllrohren (110, 130), auf die jeweils ein Verpackungshüllenvorrat (M) aufbringbar ist;
- eine Robotervorrichtung (600) zum Überführen eines Verpackungshüllenvorrats (M) von der Lagervorrichtung (200) auf ein Füllrohr (110, 130) der Clipmaschine (CM); und
- eine Steuereinheit (CU) zum Steuern des Betriebs wenigstens der Robotervorrichtung (600),
wobei die Steuereinheit (CU) dazu eingerichtet ist, den Betrieb der Robotervorrichtung in Abhängigkeit vom Füllstand eines zu füllenden wurstförmigen Produkts zu steuern.

13. System nach Anspruch 12,
wobei die Füllrohre (110, 130) der Clipmaschine (CM) so konfiguriert sind, dass ein Füllrohr (110) eine Füllposition zum Befüllen eines Schlauchverpackungshüllenvorrats (M) mit einem Füllgut einnehmen kann und das andere Füllrohr (130) eine Nachladeposition zum Laden eines neuen Schlauchverpackungshüllenvorrats (M) auf das Füllrohr (130) einnehmen kann, und umgekehrt, wobei die Steuereinheit (CU) dazu konfiguriert ist, die Robotervorrichtung (600) so zu steuern, dass die Robotervorrichtung (600) einen neuen Schlauchverpackungshüllenvorrat (M) auf das in der Nachladeposition angeordnete Füllrohr (130) auflegt, während sich das andere Füllrohr (110) in der Füllposition befindet.

14. System nach Anspruch 12 oder 13,
wobei die Füllrohre (110, 130) der Clipmaschine (CM) so konfiguriert sind, dass ein Füllrohr (110) eine Füllposition zum Befüllen eines Schlauchverpackungshüllenvorrats (M) mit einem Füllgut einnehmen kann und das andere Füllrohr (130) eine Nachladeposition zum Laden eines neuen Schlauchverpackungshüllenvorrats (M) auf das Füllrohr (130) einnehmen kann, und umgekehrt, wobei das erste Füllrohr (110) mit einer ersten Darmbremseinheit (122) versehen ist, die vom ersten Füllrohr (110) reversibel abnehmbar ist, und das zweite Füllrohr (130) mit einer zweiten Darmbremseinheit (142) versehen ist, die vom zweiten Füllrohr (130) reversibel abnehmbar ist, und wobei die Steuereinheit (CU) dazu konfiguriert ist, den dem Füllrohr (130) in der Nachladeposition zugeführten Schlauchverpackungshüllenvorrat (M) freizugeben, wenn die jeweilige Darmbremseinheit (142) vor dem Füllrohr (130) positioniert ist, kurz bevor sie auf dieses aufgeschoben wird.

15. Verwendung einer Robotervorrichtung (600) mit einer Greifereinheit (640), die mit dem Verfahren nach den Ansprüchen 1 bis 11 gesteuert wird und in einem System (1000) zur Herstellung wurstförmiger Produkte (S) nach den Ansprüchen 12 bis 14 angeordnet ist.

## Revendications

1. Procédé de commande d'un dispositif robotique (600) par une unité de commande (CU) d'une machine d'agrafage (CM), le dispositif robotique (600) étant agencé dans un système (1000) destiné à produire des produits en forme de saucisse (S) par remplissage d'un matériau de remplissage dans une alimentation d'enveloppe d'emballage tubulaire (M) agencée sur un tube de remplissage (110, 130) de la machine d'agrafage (CM), le système (1000) comprenant au moins la machine d'agrafage (CM) pourvue d'au moins deux tubes de remplissage (110, 130), un dispositif de stockage (200) destiné à stocker au moins une alimentation d'enveloppe d'emballage tubulaire (M) et un dispositif robotique (600) destiné à transférer une alimentation d'enveloppe d'emballage tubulaire (M) depuis le dispositif de stockage (200) sur un tube de remplissage (110, 130) de la machine d'agrafage (CM), l'unité de commande (CU) étant conçue pour fournir des instructions de commande au moins au dispositif robotique (600) et le dispositif robotique (600) comprenant une unité de préhension (640) destinée à saisir une alimentation d'enveloppe d'emballage tubulaire (M),
le procédé comprenant les étapes de :
- déplacement du dispositif robotique (600) dans une position de prélèvement pour le prélèvement, par l'unité de préhension (640), d'une alimentation d'enveloppe d'emballage tubulaire (M) disposée dans un dispositif de stockage (200) ;
- préhension de l'alimentation d'enveloppe d'emballage tubulaire (M) disposée dans un dispositif de stockage (200) par l'unité de préhension (640) ;
- déplacement du dispositif robotique (600) depuis la position de prélèvement vers le tube de remplissage (10) ;
- transfert de l'alimentation d'enveloppe d'emballage tubulaire (M) sur le tube de remplissage (10) par l'unité de préhension (640) ; et
- libération de l'alimentation d'enveloppe d'emballage tubulaire (M) sur le tube de remplissage (110) de la machine d'agrafage (CM) par l'unité de préhension (640).

2. Procédé selon la revendication 1,
le dispositif robotique (600) comprenant au moins une première unité de capteur (SU1) associée à l'unité de préhension (640), destinée à détecter la position de l'unité de préhension (640) par rapport à l'alimentation d'enveloppe d'emballage tubulaire (M) dans le dispositif de stockage (200) et/ou à détecter la position de l'unité de préhension (640) par rapport au tube de remplissage (110).

3. Procédé selon la revendication 1 ou 2,
l'unité de préhension (640) comprenant au moins un premier et un second élément de préhension (646, 648) agencés latéralement le long d'un axe de préhension (650) s'étendant longitudinalement et au moins une seconde unité de capteur (SU2), destinée à détecter la force de préhension exercée par lesdits au moins premier et second éléments de préhension (646, 648) sur l'alimentation d'enveloppe d'emballage tubulaire (M), le procédé comprenant en outre de préférence l'étape de :
- limitation de la force de préhension exercée par lesdits au moins premier et second éléments de préhension (646, 648) sur l'alimentation d'enveloppe d'emballage tubulaire (M) à une valeur prédéfinie.

4. Procédé selon l'une quelconque des revendications 1 à 3, comprenant en outre l'étape de :
- déplacement de l'unité de préhension (640) le long d'un trajet de déplacement prédéfini vers le tube de remplissage (130) de la machine d'agrafage (CM).

5. Procédé selon l'une quelconque des revendications 1 à 4, comprenant en outre l'étape de :
- positionnement de l'unité de préhension (640) avec son axe de préhension (650) coaxialement à l'axe central du tube de remplissage (110) et devant le tube de remplissage (130) ; et
- décalage de l'alimentation d'enveloppe d'emballage tubulaire (M) sur le tube de remplissage (130) par l'unité de préhension (640).

6. Procédé selon la revendication 5, lorsqu'elle dépend de la revendication 2, comprenant en outre les étapes de :
- détection, par la première unité de capteur (SU1), de la position de l'alimentation d'enveloppe d'emballage tubulaire (M) sur le tube de remplissage (130) ; et
- libération de l'alimentation d'enveloppe d'emballage tubulaire (M) sur le tube de remplissage (130).

7. Procédé selon l'une quelconque des revendications 1 à 6,
le tube de remplissage (10) de la machine d'agrafage (CM) étant pourvu d'un ensemble frein (120) d'enveloppe,
le procédé comprend en outre l'étape de :
- positionnement de l'ensemble frein (140) d'enveloppe devant le tube de remplissage (130) après le décalage de l'alimentation d'enveloppe d'emballage tubulaire (M) sur le tube de remplissage (130) et avant la libération de l'alimentation d'enveloppe d'emballage tubulaire (M) sur le tube de remplissage (130) par l'unité de préhension (640).

8. Procédé selon l'une quelconque des revendications 1 à 7,
le dispositif robotique (600) étant activé sur un signal indiquant un état spécifique de la machine d'agrafage (CM) et/ou sur un signal indiquant un état spécifique du dispositif de stockage (200).

9. Procédé selon l'une quelconque des revendications 1 à 8,
le dispositif robotique (600) étant désactivé sur un signal indiquant un état spécifique de la machine d'agrafage (CM) et/ou un état spécifique du dispositif de stockage (200).

10. Procédé selon l'une quelconque des revendications 1 à 9,
la machine d'agrafage (CM) comprenant un premier tube de remplissage (110) et au moins un second tube de remplissage (130), un tube de remplissage (110 ; 130) étant agencé dans une position de remplissage dans laquelle un matériau de remplissage est introduit dans l'enveloppe d'emballage tubulaire (M) et l'autre tube de remplissage (130 ; 110) étant agencé dans une position de recharge dans laquelle une alimentation d'enveloppe d'emballage tubulaire (M) est fournie au tube de remplissage (130) et
le dispositif robotique (600) étant activé sur un signal indiquant qu'un tube parmi le premier ou le second tube de remplissage (110 ; 130) est agencé dans la position de recharge ou se déplace vers celle-ci.

11. Procédé selon l'une quelconque des revendications 1 à 10,
l'unité de préhension (640) comprenant au moins une unité de capteur supplémentaire destinée à détecter la position des éléments de préhension (646, 648).

12. Système de production de produits en forme de saucisses (S), tels que des saucisses, par remplissage d'un matériau de remplissage dans une alimentation d'enveloppe d'emballage tubulaire (M) agencée sur un tube de remplissage (110, 130) d'une machine d'agrafage (CM), comprenant au moins :
- un dispositif de stockage (200) destiné à stocker au moins une alimentation d'enveloppe d'emballage (M) ;
- une machine d'agrafage (CM) pourvue d'au moins deux tubes de remplissage (110, 130) sur chacun desquels une alimentation d'enveloppe d'emballage (M) peut être appliquée ;
- un dispositif robotique (600) destiné à transférer une alimentation d'enveloppe d'emballage (M) depuis le dispositif de stockage (200) sur un tube de remplissage (110, 130) de la machine d'agrafage (CM) ; et
- une unité de commande (CU) destinée à commander le fonctionnement d'au moins le dispositif robotique (600),
l'unité de commande (CU) étant conçue pour commander le fonctionnement du dispositif robotique en fonction de l'état de remplissage d'un produit en forme de saucisse à remplir.

13. Système selon la revendication 12,
les tubes de remplissage (110, 130) de la machine d'agrafage (CM) étant conçus de telle sorte qu'un tube de remplissage (110) peut adopter une position de remplissage prévue pour le remplissage d'une alimentation d'enveloppe d'emballage tubulaire (M) par un matériau de remplissage et l'autre tube de remplissage (130) peut adopter une position de recharge prévue pour le chargement d'une nouvelle alimentation d'enveloppe d'emballage tubulaire (M) sur le tube de remplissage (130) et inversement, l'unité de commande (CU) étant conçue pour commander le dispositif robotique (600) de telle sorte que le dispositif robotique (600) applique une nouvelle alimentation d'enveloppe d'emballage tubulaire (M) sur le tube de remplissage (130) positionné dans la position de recharge tandis que l'autre tube de remplissage (110) est dans la position de remplissage.

14. Système selon la revendication 12 ou 13,
les tubes de remplissage (110, 130) de la machine d'agrafage (CM) étant conçus de telle sorte qu'un tube de remplissage (110) peut adopter une position de remplissage prévue pour le remplissage d'une alimentation d'enveloppe d'emballage tubulaire (M) par un matériau de remplissage et l'autre tube de remplissage (130) peut adopter une position de recharge prévue pour le chargement d'une nouvelle alimentation d'enveloppe d'emballage tubulaire (M) sur le tube de remplissage (130) et inversement, le premier tube de remplissage (110) étant pourvu d'une première unité de frein (122) d'enveloppe détachable de manière réversible du premier tube de remplissage (110) et le second tube de remplissage (130) étant pourvu d'une seconde unité de frein (142) d'enveloppe détachable de manière réversible du second tube de remplissage (130) et l'unité de commande (CU) étant conçue pour libérer l'alimentation d'enveloppe d'emballage tubulaire (M) fournie au tube de remplissage (130) situé dans la position de recharge lorsque l'unité de frein (142) d'enveloppe respective est positionnée devant le tube de remplissage (130) peu avant d'être poussée sur ce dernier.

15. Utilisation d'un dispositif robotique (600) comprenant une unité de préhension (640), commandée par le procédé selon les revendications 1 à 11 et agencé dans un système (1000) destiné à produire des produits en forme de saucisse (S) selon les revendications 12 à 14.
